(19) Europäisches Patentamt
European Patent Office
Office européen des brevets

(11) EP 2 985 860 A1

(12) EUROPEAN PATENT APPLICATION
published in accordance with Art. 153(4) EPC

(43) Date of publication:
17.02.2016 Bulletin 2016/07

(51) Int Cl.:
$H02J\ 50/00$ (2016.01)　　$H01F\ 38/14$ (2006.01)
$H02J\ 7/00$ (2006.01)

(21) Application number: 13876518.5

(22) Date of filing: 10.10.2013

(86) International application number:
PCT/JP2013/077565

(87) International publication number:
WO 2014/132480 (04.09.2014 Gazette 2014/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.02.2013 JP 2013039795

(71) Applicant: Nitto Denko Corporation
Ibaraki-shi, Osaka 567-8680 (JP)

(72) Inventors:
• HATANAKA, Takezo
Ibaraki-shi
Osaka 567-8680 (JP)
• TSUDA, Hisashi
Ibaraki-shi
Osaka 567-8680 (JP)

(74) Representative: Müller-Boré & Partner
Patentanwälte PartG mbB
Friedenheimer Brücke 21
80639 München (DE)

(54) **WIRELESS POWER TRANSMISSION DEVICE, METHOD FOR ADJUSTING LOAD FLUCTUATION RESPONSE OF INPUT IMPEDANCE IN WIRELESS POWER TRANSMISSION DEVICE, AND METHOD FOR MANUFACTURING WIRELESS POWER TRANSMISSION DEVICE**

(57)　In order to adjust the load fluctuation response of an input impedance ($Z_{in}$) (i.e., a change in the value of an input impedance in a wireless power transmission device relative to the unit variation of a load impedance ($Z_1$) of a device to be supplied with power) in a wireless power transmission device (1) wherein a magnetic field is altered to supply power from a power supply module (2) to a power-receiving module (3) to which devices to be supplied with power (i.e., a stabilizing circuit (7), a charging circuit (8) and a lithium-ion secondary battery (9)) are connected, the value of a coupling coefficient ($k_{12}$) between a power supply coil (21) and a power supply resonator (22), and the value of a coupling coefficient ($k_{34}$) between a power-receiving resonator (32) and a power-receiving coil (31) are each adjusted.

FIG.12

**Description**

TECHNICAL FIELD

The present invention relates to a wireless power transmission apparatus, a method for adjusting the load fluctuation response of an input impedance in the wireless power transmission apparatus, and a method for manufacturing the wireless power transmission apparatus.

BACKGROUND ART

Portable electronic devices such as laptop PCs, tablet PCs, digital cameras, mobile phones, portable gaming devices, earphone-type music players, RF headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying device and a power-receiving device mounted in an electronic device.

For example, as a wireless power transmission technology, there have been known, for example, a technology that performs power transmission by means of electromagnetic induction between coils (e.g. see PTL 1), a technology that performs power transmission by means of resonance phenomenon (magnetic field resonant state) between resonators (coils) provided to the power-supplying device and the power-receiving device (e.g. see PTL 2).

Further, a constant current/constant voltage charging system is known as the system of charging a rechargeable battery (e.g., lithium ion secondary battery). However, in cases of charging a lithium ion secondary battery with a constant current/constant voltage charging system, in a wireless power transmission apparatus that performs the wireless power transmission, the value of input current supplied is attenuated and the load impedance of a power-supplied electronic device (including a rechargeable battery, a stabilizer circuit, a charging circuit, and the like) including the rechargeable battery, when transition occurs from constant current charging to constant voltage charging.

This will lead to an increase in the input impedance of the entire wireless power transmission apparatus including the power-supplied electronic device. If it is possible to cause a great variation in the input impedance according to the increase in the value of the load impedance of the power-supplied electronic device, it is possible to reduce the power consumed at the time of charging. In other words, to reduce the power consumption in charging, the load fluctuation response needs to be adjustable, the load fluctuation response being an amount of variation in the value of the input impedance of the wireless power transmission apparatus relative to a unit variation amount of the load impedance of the power-supplied electronic device.

To make the load fluctuation response adjustable, it is conceivable to provide an impedance matching box separately.

CITATION LIST

Patent Literature

PTL 1: Japanese patent No. 4624768
PTL 2: Japanese Unexamined Paten Publication No. 2010-239769

SUMMARY OF THE INVENTION

Technical Problem

However, separately providing an impedance matching box causes an increases in the number of components, and is inconvenient in portable electronic devices for which portability, compactness, and cost-efficiency are required.

In other words, the load fluctuation response is preferably adjusted without an additional device to the wireless power transmission apparatus (power-supplying device and power-receiving device).

In view of the above, an object of the present invention is to provide a method of adjusting the load fluctuation response of an input impedance in a wireless power transmission apparatus, which, without an additional device, enables adjustment of the load fluctuation response consequently allowing control of an amount of the supplied power, by adjustment of coupling coefficients between coils provided in a power-supplying device and a power-receiving device of the wireless power transmission apparatus.

TECHNICAL SOLUTION

An aspect of the present invention to achieve the above object is a method of adjusting a load fluctuation response of an input impedance in a wireless power transmission apparatus configured to supply power, by means of variation in a magnetic field, from a power-supplying module to a power-receiving module connected to a power-supplied electronic device which consumes the power, wherein the power-supplying module and the power-receiving module each has at least one coil, and the load fluctuation response is adjusted by adjusting values of coupling coefficients between the coils arranged side-by-side, the load fluctuation response being an amount of variation in the input impedance of the wireless power transmission apparatus relative to a unit variation amount of a load impedance of the power-supplied electronic device.

With the method described above, if there is a variation in the load impedance of the power-supplied electronic device receiving the power supplied from the wireless power transmission apparatus, the load fluctuation response is adjusted by adjusting values of coupling coefficients between the coils of the power-supplying module and the power-receiving module, the load fluctuation response being an amount of variation in the input impedance of the wireless power transmission apparatus relative to a unit variation amount of a load impedance of the power-supplied electronic device. This way, for example, by varying the values of coupling coefficients between the coils to reduce the load fluctuation response, it is possible to reduce the amount of variation in the input impedance of the wireless power transmission apparatus corresponding to the variation in the load impedance in the power-supplied electronic device. To the contrary, by varying the values of coupling coefficients between the coils to increase the load fluctuation response, it is possible to increase the amount of variation in the input impedance of the wireless power transmission apparatus corresponding to the variation in the load impedance in the power-supplied electronic device.

If the load fluctuation response is raised, it is possible to vary the value of the input impedance of the wireless power transmission apparatus, following the variation in the load impedance of the power-supplied electronic device, and reduce the power supplied. If the load fluctuation response is reduced, it is possible to maintain the value of the input impedance of the wireless power transmission apparatus, despite the variation in the load impedance of the power-supplied electronic device, and maintain the power supplied.

To add this, the structure allows adjustment of the load fluctuation response of the input impedance in the wireless power transmission apparatus, without a need of an additional device. In other words, adjustment of the load fluctuation response of the input impedance in a wireless power transmission apparatus is possible without a need of an additional component in the wireless power transmission apparatus.

Another aspect of the present invention to achieve the above object is the method of adjusting the load fluctuation response of the input impedance in a wireless power transmission apparatus configured to supply power, by means of a resonance phenomenon, from a power-supplying module comprising at least a power-supplying coil and a power-supplying resonator to a power-receiving module comprising at least a power-receiving resonator and a power-receiving coil, the power-receiving module connected to a power-supplied electronic device which consumes the power, wherein the load fluctuation response is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

With the above method, it is possible to adjust the load fluctuation response in the input impedance of the wireless power transmission apparatus which supplies power from the power-supplying module to the power-receiving module by means of resonance phenomenon, by adjusting the values of the coupling coefficient $k_{12}$ between the power-supplying coil and the power-supplying resonator, the coupling coefficient $k_{23}$ between the power-supplying resonator and the power-receiving resonator, and the coupling coefficient $k_{34}$ between the power-receiving resonator and the power-receiving coil.

Another aspect of the present invention to achieve the above object is the method of adjusting the load fluctuation response of an input impedance in a wireless power transmission apparatus, adapted so that the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

With the above method, the value of the coupling coefficient $k_{12}$ is varied by varying the distance between the power-supplying coil and the power-supplying resonator, the value of the coupling coefficient $k_{23}$ is varied by varying the distance between the power-supplying resonator and the power-receiving resonator, and the value of the coupling coefficient $k_{34}$ is varied by varying the distance between the power-receiving resonator and the power-receiving coil. Thus, it is possible to vary the values of coupling coefficients between coils, simply by physically varying the distance between the power-supplying coil and the power-supplying resonator, the distance between the power-supplying resonator and the power-receiving resonator, and the distance between the power-receiving resonator and the power-receiving coil. In other words, it is possible to adjust the load fluctuation response of an input impedance in a wireless power transmission apparatus, simply by physically varying the distance between the power-supplying coil and the power-supplying resonator, the distance between the power-supplying resonator and the power-receiving resonator, and the distance between the power-receiving resonator and the power-receiving coil.

Another aspect of the present invention to achieve the above object is the method of adjusting the load fluctuation response of an input impedance in a wireless power transmission apparatus, adapted so that the adjustment is based on a characteristic such that, if the distance between the power-supplying resonator and the power-receiving resonator, and the distance between the power-receiving resonator and the power-receiving coil are fixed, the load fluctuation response is such that, the value of the coupling coefficient $k_{12}$ between the power-supplying coil and the power-supplying resonator increases with a decrease in the distance between the power-supplying coil and the power-supplying resonator, and the load fluctuation response of the input impedance in the wireless power transmission apparatus rises with the increase in the value of the coupling coefficient $k_{12}$.

With the above method, if the distance between the power-supplying resonator and the power-receiving resonator and the distance between the power-receiving resonator and the power-receiving coil are fixed, the value of the coupling coefficient $k_{12}$ between the power-supplying coil and the power-supplying resonator is increased with a decrease in the distance between the power-supplying coil and the power-supplying resonator. Increasing the value of the coupling coefficient $k_{12}$ raises the load fluctuation response of the input impedance in the wireless power transmission apparatus. To the contrary, by increasing the distance between the power-supplying coil and the power-supplying resonator, the value of the coupling coefficient $k_{12}$ between the power-supplying coil and the power-supplying resonator is reduced. Reduction of the value of the coupling coefficient $k_{12}$ lowers the load fluctuation response of the input impedance in the wireless power transmission apparatus.

If the load fluctuation response is raised, the amount of variation in the value of the input impedance in the wireless power transmission apparatus with respect to the variation of the load impedance in the power-supplied electronic device is increased. Therefore, the value of the input impedance in the wireless power transmission apparatus is varied significantly, following the variation in the load impedance of the power-supplied electronic device, and the power supplied at the time is reduced. On the other hand, if the load fluctuation response is reduced, the amount of variation in the value of the input impedance in the wireless power transmission apparatus with respect to the variation of the load impedance in the power-supplied electronic device is reduced. Therefore, the value of the input impedance in the wireless power transmission apparatus is maintained, even if there is variation in the load impedance of the power-supplied electronic device, and the power supplied at the time is maintained.

Another aspect of the present invention to achieve the above object is the method of adjusting the load fluctuation response of an input impedance in a wireless power transmission apparatus, adapted so that the adjustment is based on a characteristic such that, if the distance between the power-supplying coil and the power-supplying resonator, and the distance between the power-supplying resonator and the power-receiving resonator are fixed, the load fluctuation response is such that, the value of the coupling coefficient $k_{34}$ between the power-receiving resonator and the power-receiving coil increases with a decrease in the distance between the power-receiving resonator and the power-receiving coil, and the load fluctuation response of the input impedance in the wireless power transmission apparatus rises with the increase in the value of the coupling coefficient $k_{34}$.

With the above method, if the distance between the power-supplying coil and the power-supplying resonator and the distance between the power-supplying resonator and the power-receiving resonator are fixed, the value of the coupling coefficient $k_{34}$ between the power-receiving resonator and the power-receiving coil is increased with a decrease in the distance between the power-receiving resonator and the power-receiving coil. Increasing the value of the coupling coefficient $k_{34}$ raises the load fluctuation response of the input impedance in the wireless power transmission apparatus. To the contrary, by increasing the distance between the power-receiving resonator and the power-receiving coil, the value of the coupling coefficient $k_{34}$ between the power-receiving resonator and the power-receiving coil is reduced. Reduction of the value of the coupling coefficient $k_{34}$ lowers the load fluctuation response of the input impedance in the wireless power transmission apparatus.

If the load fluctuation response is raised, the amount of variation in the value of the input impedance in the wireless power transmission apparatus with respect to the variation of the load impedance in the power-supplied electronic device is increased. Therefore, the value of the input impedance in the wireless power transmission apparatus is varied significantly, following the variation in the load impedance of the power-supplied electronic device, and the power supplied at the time is reduced. On the other hand, if the load fluctuation response is reduced, the amount of variation in the value of the input impedance in the wireless power transmission apparatus with respect to the variation of the load impedance in the power-supplied electronic device is reduced. Therefore, the value of the input impedance in the wireless power transmission apparatus is maintained, even if there is variation in the load impedance of the power-supplied electronic device, and the power supplied at the time is maintained.

Another aspect of the present invention to achieve the above object is the method of adjusting the load fluctuation response of an input impedance in a wireless power transmission apparatus, adapted so that, a transmission characteristic with respect to a driving frequency of the power supplied to the power-supplying module has a peak occurring in a drive frequency band lower than a resonance frequency of the power-supplying module and the power-receiving module, and a peak occurring in a drive frequency band higher than the resonance frequency, and the driving frequency of the power supplied to the power-supplying module is in a band corresponding to a peak value of the transmission characteristic occurring in a driving frequency band lower than the resonance frequency.

With the method described above, when the transmission characteristic with respect to a driving frequency of the power supplied to the power-supplying module is set so as to have a peak occurring in a drive frequency band lower than a resonance frequency of the power-supplying module and the power-receiving module, and a peak occurring in a drive frequency band higher than the resonance frequency, a relatively high transmission characteristic is ensured by setting the driving frequency of the power supplied to the power-supplying module in a band corresponding to a peak value of the transmission characteristic occurring in a driving frequency band lower than the resonance frequency.

With this, as the magnetic field occurring on the outer circumference side of the power-supplying module and the magnetic field occurring on the outer circumference side of the power-receiving module cancel each other out, the influence of the magnetic fields on the outer circumference sides of the power-supplying module and the power-receiving module is restrained, and the magnetic field space having a smaller magnetic field strength than a magnetic field strength in positions other than the outer circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention to achieve the above object is the method of adjusting the load fluctuation response of an input impedance in a wireless power transmission apparatus, adapted so that, a transmission characteristic with respect to a driving frequency of the power supplied to the power-supplying module has a peak occurring in a drive frequency band lower than a resonance frequency of the power-supplying module and the power-receiving module, and in a drive frequency band higher than the resonance frequency, and the driving frequency of the power supplied to the power-supplying module is in a band corresponding to a peak value of the transmission characteristic occurring in a driving frequency band higher than the resonance frequency.

With the method described above, when the transmission characteristic with respect to a driving frequency of the power supplied to the power-supplying module is set so as to have a peak occurring in a drive frequency band lower than a resonance frequency of the power-supplying module and the power-receiving module, and a peak occurring in a drive frequency band higher than the resonance frequency, a relatively high transmission characteristic is ensured by setting the driving frequency of the power supplied to the power-supplying module in a band corresponding to a peak value of the transmission characteristic occurring in a driving frequency band higher than the resonance frequency. Further, as the magnetic field occurring on the inner circumference side of the power-supplying module and the magnetic field occurring on the inner circumference side of the power-receiving module cancel each other out, the influence of the magnetic fields on the inner circumference sides of the power-supplying module and the power-receiving module is restrained, and the magnetic field space having a smaller magnetic field strength than a magnetic field strength in positions other than the inner circumference sides of the power-supplying module and the power-receiving module is formed. By placing, within the magnetic field space, circuits and the like which should be away from the influence of the magnetic field, it is possible to efficiently utilize a space, and downsize the wireless power transmission apparatus itself.

Another aspect of the present invention to achieve the above object is a wireless power transmission apparatus which is adjusted by the above-described method of adjusting the load fluctuation response of an input impedance.

With the structure, the structure allows adjustment of the load fluctuation response of the input impedance in the wireless power transmission apparatus, without a need of an additional device. In other words, adjustment of the load fluctuation response of the input impedance in a wireless power transmission apparatus is possible without a need of an additional component in the wireless power transmission apparatus.

Another aspect of the present invention to achieve the above object is a method of manufacturing a wireless power transmission apparatus configured to cause variation in a magnetic field to supply power from a power-supplying module to a power-receiving module connected to a power-supplied electronic device which consumes the power, comprising: providing at least one coil in each of the power-supplying module and the power-receiving module, and adjusting the load fluctuation response by adjusting values of coupling coefficients between the coils arranged side-by-side, the load fluctuation response being an amount of variation in the input impedance of the wireless power transmission apparatus relative to a unit variation amount of a load impedance of the power-supplied electronic device.

With the method, it is possible to manufacture a wireless power transmission apparatus whose load fluctuation response of the input impedance therein is adjustable, without a need of an additional device. In other words, it is possible to manufacture a wireless power transmission apparatus that enables adjustment of the load fluctuation response of the input impedance in a wireless power transmission apparatus without a need of an additional component in the wireless power transmission apparatus.

ADVANTAGEOUS EFFECTS

There is provided a method of adjusting the load fluctuation response of an input impedance in a wireless power transmission apparatus, which enables adjustment of the load fluctuation response consequently allowing control of an amount of the supplied power, by adjustment of coupling coefficients between coils provided in a power-supplying device and a power-receiving device of the wireless power transmission apparatus.

DESCRIPTION OF THE DRAWINGS

[FIG. 1] FIG. 1 is a schematic explanatory diagram of a wireless power transmission apparatus.
[FIG. 2] FIG. 2 is an explanatory diagram of an equivalent circuit of the wireless power transmission apparatus.
[FIG. 3] FIG. 3 is a graph indicating the load fluctuation characteristic of a load impedance of a power-supplied electronic device and a charging characteristic of a lithium ion secondary battery.
[FIG. 4] FIG. 4 is an explanatory diagram indicating relation of transmission characteristic "S21" to a driving frequency.
[FIG. 5] FIG. 5 is a graph showing measurement results related to Measurement Experiment 1.
[FIG. 6] FIG. 6 is a graph showing measurement results related to Measurement Experiment 2.
[FIG. 7] FIG. 7 is a graph showing measurement results related to Measurement Experiment 3.
[FIG. 8] FIG. 8 is a graph showing measurement results related to Measurement Experiment 4.
[FIG. 9] FIG. 9 is a graph showing measurement results related to Measurement Experiment 5.
[FIG. 10] FIG. 10 is a graph showing measurement results related to Measurement Experiment 6.
[FIG. 11] FIG. 11 is a graph showing a relationship between an inter coil distance and a coupling coefficient, in the wireless power transmission.
[FIG. 12] FIG. 12 is an explanatory diagram of a manufacturing method of a wireless power transmission apparatus.
[FIG. 13] FIG. 13 is a flowchart explaining a method for designing an RF headset and a charger, including the wireless power transmission apparatus.

DESCRIPTION OF EMBODIMENTS

(Embodiment)

The following describes an embodiment of a wireless power transmission apparatus, a method of adjusting the load fluctuation response of an input impedance in a wireless power transmission apparatus and manufacturing method for the wireless power transmission apparatus related to the present invention. First, a wireless power transmission apparatus 1 used in the present embodiment is described.

(Structure of Wireless Power Transmission Apparatus 1)

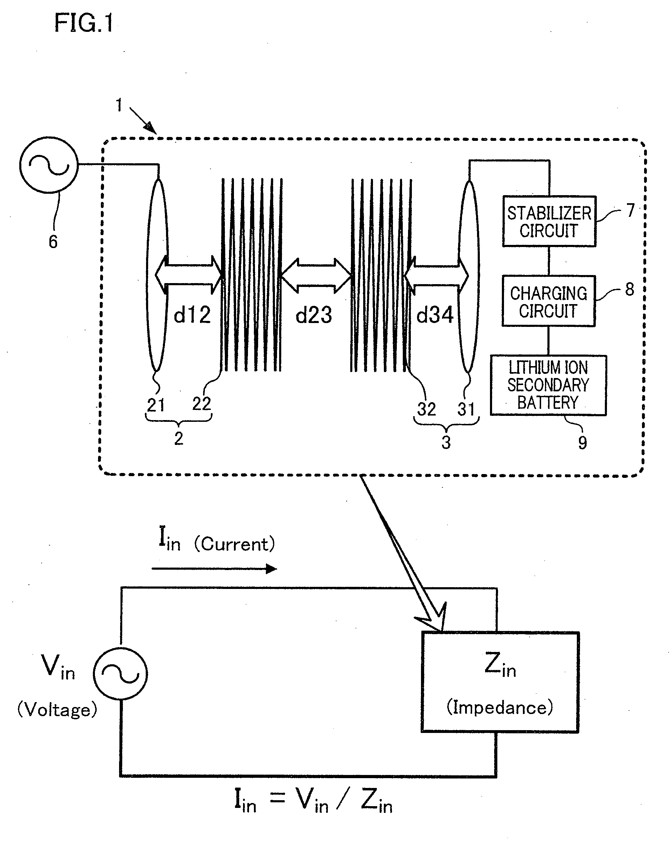

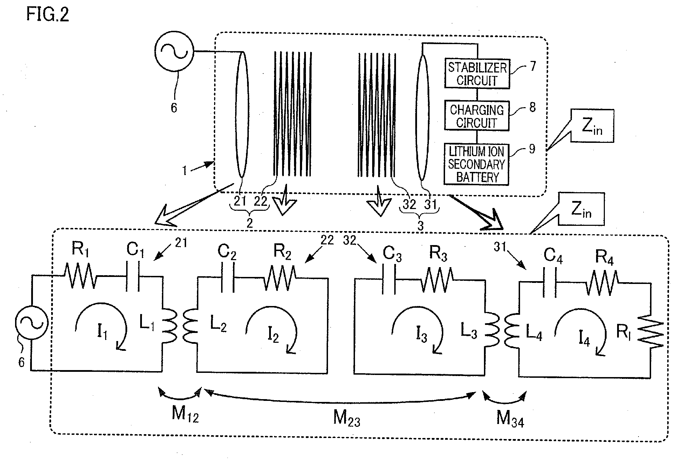

The wireless power transmission apparatus 1 includes: a power-supplying module 2 having a power-supplying coil 21 and a power-supplying resonator 22; and a power-receiving module 3 having a power-receiving coil 31 and the power-receiving resonator 32, as shown in FIG. 1. The power-supplying coil 21 of the power-supplying module 2 is connected to an AC power source 6 having an oscillation circuit configured to set the driving frequency of power supplied to the power-supplying module 2 to a predetermined value. The power-receiving coil 31 of the power-receiving module 3 is connected to a lithium ion secondary battery 9 via a stabilizer circuit 7 configured to rectify the AC power received, and a charging circuit 8 configured to prevent overcharge. It should be noted that, in the present embodiment, the stabilizer circuit 7, the charging circuit 8, and the lithium ion secondary battery 9 correspond to a power-supplied electronic device.
The power-supplying coil 21 plays a role of supplying power obtained from the AC power source 6 to the power-supplying resonator 22 by means of electromagnetic induction. As shown in FIG. 2, the power-supplying coil 21 is constituted by an RLC circuit whose elements include a resistor $R_1$, a coil $L_1$, and a capacitor $C_1$. The coil $L_1$ is a single-turn coil of a copper wire material (coated by an insulation film) with its coil diameter set to 96mm$\phi$. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$.
The power-receiving coil 31 plays roles of receiving the power having been transmitted as a magnetic field energy from the power-supplying resonator 22 to the power-receiving resonator 32, by means of electromagnetic induction, and supplying the power received to the lithium ion secondary battery 9 via the stabilizer circuit 7 and the charging circuit 8. As shown in FIG. 2, the power-receiving coil 31, similarly to the power-supplying coil 21, is constituted by an RLC circuit whose elements include a resistor $R_4$, a coil $L_4$, and a capacitor $C_4$. The coil $L_4$ is a single-turn coil of a copper wire material (coated by an insulation film) with its coil diameter set to 96 mm$\phi$. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. However, as shown in FIG. 2, the total load impedance $Z_1$ of the stabilizer circuit 7, the charging circuit 8, and the lithium ion secondary battery 9 connected to the power-receiving coil 31 is implemented in the form of a resistor $R_L$ in the present embodiment for the sake of convenience.

As shown in FIG. 2, the power-supplying resonator 22 is constituted by an RLC circuit whose elements include a resistor $R_2$, a coil $L_2$, and a capacitor $C_2$. Further, as shown in FIG. 2, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils tuned to a resonance frequency. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$.

In the RLC circuit which is the resonance circuit in each of the power-supplying resonator 22 and the power-receiving resonator 32, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 12.8 MHz [Equation 1]

$$f = \frac{1}{2\pi\sqrt{LC}} \quad ...(Formula\ 1)$$

The power-supplying resonator 22 and the power-receiving resonator 32 are each a 4-turn solenoid coil of a copper wire material (coated by insulation film), with its coil diameter being 96 mm$\phi$. The resonance frequency of the power-supplying resonator 22 and that of the power-receiving resonator 32 are matched with each other. The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 2, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in regard to the wireless power transmission apparatus 1, a coupling coefficient between the coil $L_1$ and the coil $L_2$ is denoted as $K_{12}$, a coupling coefficient between the coil $L_2$ and the coil $L_3$ is denoted as $K_{23}$, a coupling coefficient between the coil $L_3$ and the coil $L_4$ is denoted as $K_{34}$.

The resistance values, inductances, capacities of capacitors, and coupling coefficients $K_{12}$, $K_{23}$, and $K_{34}$ of $R_1$, $L_1$, and $C_1$ of the RLC circuit of the power-supplying coil 21, $R_2$, $L_2$, and $C_2$ of the RLC circuit of the power-supplying resonator 22, $R_3$, $L_3$, and $C_3$ of the RLC circuit of the power-receiving resonator 32, and $R_4$, $L_4$, and $C_4$ of the RLC circuit of the power-receiving coil 31 are parameters variable at the stage of designing and manufacturing, and are preferably set so as to satisfy the relational expression of (Formula 3) which is described later.

FIG. 1 shows at its bottom a circuit diagram of the wireless power transmission apparatus 1 (including: the stabilizer circuit 7, the charging circuit 8, and the lithium ion secondary battery 9) having the structure as described above. In the figure, the entire wireless power transmission apparatus 1 is shown as a single input impedance $Z_{in}$.

The (Formula 2) is a relational expression of the current Iin, based on the voltage $V_{in}$ and input impedance $Z_{in}$. [Equation 2]

$$I_{in} = \frac{V_{in}}{Z_{in}} \quad ...(Formula\ 2)$$

To be more specific about the input impedance $Z_{in}$ of the wireless power transmission apparatus 1, the structure of the wireless power transmission apparatus 1 is expressed in an equivalent circuit as shown in FIG. 2. Based on the equivalent circuit in FIG. 2, the input impedance $Z_{in}$ of the wireless power transmission apparatus 1 is expressed as the (Formula 3).
[Equation 3]

$$Z_{in} = Z_1 + \cfrac{(\omega M_{12})^2}{Z_2 + \cfrac{(\omega M_{23})^2}{Z_3 + \cfrac{(\omega M_{34})^2}{Z_4 + Z_l}}}$$

$$M_{12} = k_{12}\sqrt{L_1 L_2} \quad M_{23} = k_{23}\sqrt{L_2 L_3} \quad M_{34} = k_{34}\sqrt{L_3 L_4}$$

$$(K_{ij} \text{ is a coupling coefficient between } L_i \text{ and } L_j)$$

..... (Formula 3)

Further, the impedance $Z_1$, $Z_2$, $Z_3$, $Z_4$, and $Z_1$ of the power-supplying coil 21, the power-supplying resonator 22, the power-receiving resonator 32, and the power-receiving coil 31 in the wireless power transmission apparatus 1 of the present embodiment are expressed as the (Formula 4).
[Equation 4]

$$Z_1 = R_1 + j\left(\omega L_1 - \frac{1}{\omega C_1}\right)$$

$$Z_2 = R_2 + j\left(\omega L_2 - \frac{1}{\omega C_2}\right)$$

$$Z_3 = R_3 + j\left(\omega L_3 - \frac{1}{\omega C_3}\right)$$

$$Z_4 = R_4 + j\left(\omega L_4 - \frac{1}{\omega C_4}\right)$$

$$Z_l = R_l$$

..... (Formula 4)

Introducing the (Formula 4) into the (Formula 3) makes the (Formula 5).
[Equation 5]

$$Z_{in}=R_1+j\left(\omega L_1-\frac{1}{\omega C_1}\right)+\cfrac{(\omega M_{12})^2}{R_2+j\left(\omega L_2-\frac{1}{\omega C_2}\right)+\cfrac{(\omega M_{23})^2}{R_3+j\left(\omega L_3-\frac{1}{\omega C_3}\right)+\cfrac{(\omega M_{34})^2}{R_4+j\left(\omega L_4-\frac{1}{\omega C_4}\right)+R_1}}}$$

$$\ldots\ldots \text{(Formula 5)}$$

With the wireless power transmission apparatus 1, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy. Then, the power received by the power-receiving resonator 32 is supplied to the lithium ion secondary battery 9 thus charging the same via the power-receiving coil 31, the stabilizer circuit 7, and the charging circuit 8.

(Method of Adjusting Load Fluctuation Response)

The following describes a method of adjusting the load fluctuation response of an input impedance $Z_{in}$ in the wireless power transmission apparatus 1, based on the structure of the wireless power transmission apparatus 1.

(Load Fluctuation Response)

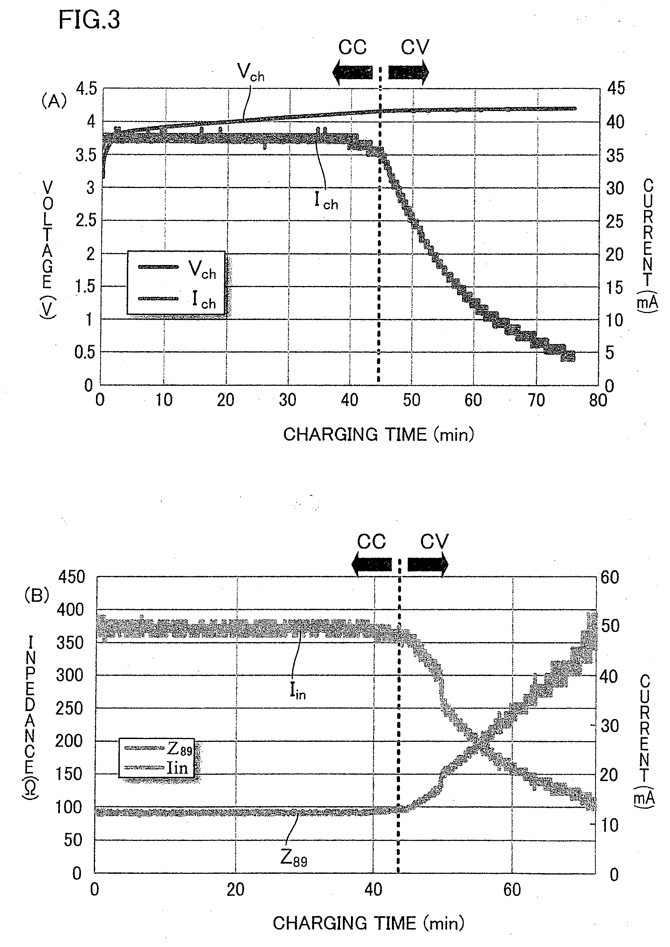

First, the following describes the load fluctuation response of the input impedance $Z_{in}$ in the wireless power transmission apparatus 1, and the usefulness of being able to adjust the load fluctuation response.
In the present embodiment, the lithium ion secondary battery 9 is used as one of the power-supplied electronic devices to which the power is supplied. To charge the lithium ion secondary battery 9, a constant current/constant voltage charging system is used in general. The lithium ion secondary battery 9 is charged by a constant current ($I_{ch}$) (CC: Constant Current) for a while after charging is started, as in the charging characteristic of the lithium ion secondary battery 9 shown in FIG. 3(A). Then, the voltage ($V_{ch}$) to be applied rises up to a predetermined upper limit voltage (4.2 V in the present embodiment), while the charging by the constant current. When the voltage ($V_{ch}$) reaches the upper limit voltage, charging by a constant voltage is performed (CV: Constant Voltage), while the upper limit voltage is maintained. The charging is completed when the value of the current reaches a predetermined value, or when a predetermined time is elapsed.
Suppose the lithium ion secondary battery 9 is charged by means of the constant current/constant voltage charging system using the wireless power transmission apparatus 1. In this case, when there is transition from constant current charging (CC) to constant voltage charging (CV), the value of the load impedance $Z_{89}$ rises during the constant current charging, with attenuation in the current value ($I_{in}$) supplied to the charging circuit 8 and the lithium ion secondary battery 9, which constitute the power-supplied electronic device, as is indicated by the load fluctuation characteristics shown in FIG. 3(B) of the load impedance $Z_{89}$ related to the charging circuit 8 and the lithium ion secondary battery 9. In short, there will be a rise in the value of the load impedance $Z_l$ of the entire power-supplied electronic device (stabilizer circuit 7, charging circuit 8, lithium ion secondary battery 9) of the present embodiment.
Then, with the rise in the value of the load impedance $Z_l$ of the power-supplied electronic device, the input impedance $Z_{in}$ of the entire wireless power transmission apparatus 1 including the power-supplied electronic device is increased. If it is possible to make significant adjustment in the input impedance $Z_{in}$ according to the increase in the value of the load impedance $Z_l$ of the power-supplied electronic device, it is possible to reduce the power consumed at the time of charging (particularly after the transition to the constant voltage charging). It should be noted that the load fluctuation response herein is an amount of variation in the value of the input impedance $Z_{in}$ of the wireless power transmission apparatus 1 relative to a unit variation amount of the load impedance $Z_l$ of the power-supplied electronic device.
That is, if the load fluctuation response of the input impedance $Z_{in}$ in the wireless power transmission apparatus 1 is made adjustable, the amount of power consumed at the time of charging a lithium ion secondary battery and the like is reduced.

Note that if the load fluctuation response of the input impedance $Z_{in}$ in the wireless power transmission apparatus 1 is made small by adjustment, it is possible to maintain the value of the input impedance $Z_{in}$ of the wireless power transmission apparatus 1 (in a state the input impedance $Z_{in}$ hardly changes), despite variation in the load impedance $Z_l$ in the power-supplied electronic device, thereby maintaining the power supplied at the time of charging, which is advantageous in cases of adopting as the power-supplied electronic device a secondary battery which requires constant power for charging.

Further, suppose that a machine that operates while directly consuming power is adopted as the power-supplied electronic device (e.g., a machine that is driven directly by the power supplied, without a use of a secondary battery and the like).

In this case too, if the load fluctuation response of the input impedance $Z_{in}$ in the wireless power transmission apparatus 1 is made small by adjustment, it is possible to maintain the value of the input impedance $Z_{in}$ of the wireless power transmission apparatus 1 (in a state the input impedance $Z_{in}$ hardly changes), despite variation in the load impedance $Z_l$ in the power-supplied electronic device, thereby maintaining the value of the input impedance $Z_{in}$ of the wireless power transmission apparatus 1. This enables stable power supply to the power-supplied electronic device, consequently stabilizing the operation of the power-supplied electronic device (avoiding unstable operation).

(Adjustment of Load Fluctuation Response by Coupling Coefficient)

It is generally known that, in the above described wireless power transmission apparatus 1, the power transmission efficiency of the wireless power transmission is maximized by matching the driving frequency of the power supplied to the power-supplying module 2 to the resonance frequencies of the power-supplying coil 21 and the power-supplying resonator 22 of the power-supplying module 2 and the power-receiving coil 31 and the power-receiving resonator 32 of the power-receiving module 3. The driving frequency is therefore set to the resonance frequency generally to maximize the power transmission efficiency. It should be noted that the power transmission efficiency is a rate of power received by the power-receiving module 3, relative to the power supplied to the power-supplying module 2.

Thus, to maximize the power transmission efficiency in the wireless power transmission apparatus 1, it is necessary to satisfy capacity conditions and resonance conditions of the capacitors and coils ($\Omega L=1/\Omega C$) so that the driving frequency matches with the resonance frequencies of the RLC circuits of the power-supplying module 2 and the power-receiving module 3.

Specifically, when the input impedance $Z_{in}$ of the wireless power transmission apparatus 1 satisfying the resonance condition ($\Omega L=1/\Omega C$) which maximizes the power transmission efficiency in the wireless power transmission apparatus 1 to the (Formula 5), the expression will be: ($\Omega L_1-1/\Omega C_1=0$), ($\Omega L_2-1/\Omega C_2=0$), ($\Omega L_3-1/\Omega C_3=0$), and ($\Omega L_4-1/\Omega C_4=0$), and the relational expression (Formula 6) is derived.

[Equation 6]

$$Z_{in} = R_1 + \cfrac{(\omega M_{12})^2}{R_2 + \cfrac{(\omega M_{23})^2}{R_3 + \cfrac{(\omega M_{34})^2}{R_4 + R_l}}}$$

..... (Formula 6)

From the above relational expression (Formula 6), it should be understood that there remains, as essential adjustable parameters in the wireless power transmission apparatus 1: resistance values such as $R_1$ of the RLC circuit of the power-supplying coil 21, the $R_2$ of the RLC circuit of the power-supplying resonator 22, $R_3$ of the RLC circuit of the power-receiving resonator 32, $R_4$ of the RLC circuit of the power-receiving coil 31; coupling coefficients $k_{12}$, $k_{23}$, $k_{34}$.

When the driving frequency of the power supplied to the power-supplying module 2 is matched with the resonance frequency to maximize the power transmission efficiency in the wireless power transmission apparatus 1, the coupling coefficients $k_{12}$, $k_{23}$, and $k_{34}$ are usable as the adjustable parameters in the wireless power transmission apparatus 1.

Further, when the driving frequency of the power supplied to the power-supplying module 2 is not matched with the resonance frequency of the power-supplying resonator 22 of the power-supplying module 2 and the power-receiving resonator 32 of the power-receiving module 3 ($\Omega L \neq 1/\Omega C$), the coupling coefficients $k_{12}$, $k_{23}$, and $k_{34}$ are usable as the adjustable parameters in the wireless power transmission apparatus 1.

(Variation in Input Impedance $Z_{in}$ due to Coupling Coefficients)

Next, with reference to measurement experiments 1 to 6, the following describes how the input impedance $Z_{in}$ of the wireless power transmission apparatus 1 varies, with variations in the coupling coefficients $k_{12}$ and $k_{34}$.

In the measurement experiments 1 to 6, the wireless power transmission apparatus 1 shown in FIG. 2 was connected to a network analyzer 110 (In the present embodiment, E5061B produced by Agilent Technologies, Inc. was used), and the value of the input impedance $Z_{in}$ relative to the coupling coefficient was measured. It should be noted that the measurements were conducted with a variable resistor 11 ($R_l$) substituting for the stabilizer circuit 7, the charging circuit 8, and the lithium ion secondary battery 9, in the measurement experiments 1 to 6.

In the Measurement Experiments are used wireless power transmission apparatus 1 with a double-hump transmission characteristic "S21" relative to the driving frequency of the power supplied to the wireless power transmission apparatus 1.

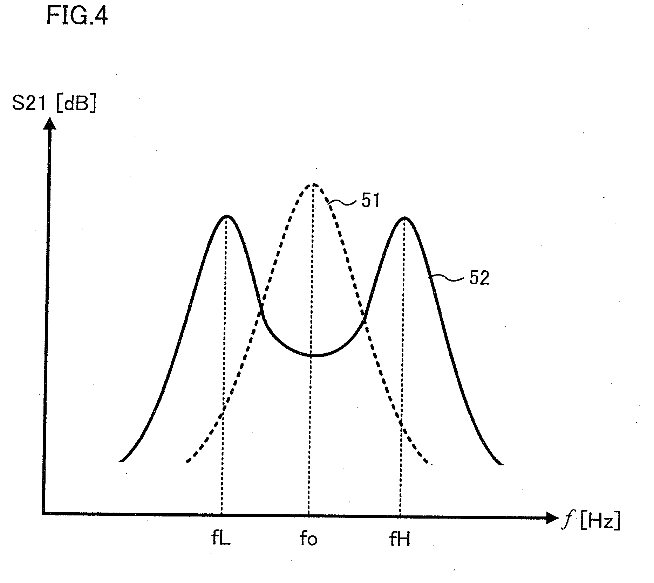

Transmission characteristic S21 is signals measured by a network analyzer 110 connected to the wireless power transmission apparatus 1, and is indicated in decibel. The greater the value, the higher the power transmission efficiency. The transmission characteristic "S21" of the wireless power transmission apparatus 1 relative to the driving frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the driving frequency has a single peak which occurs in the resonance frequency band (f0) (See dotted line 51 FIG. 4). The double-hump characteristic on the other hand means the transmission characteristic S21 relative to the driving frequency has two peaks, one of the peaks occurring in a drive frequency band lower than the resonance frequency (fL), and the other occurring in a drive frequency band higher than the resonance frequency (fH) (See solid line 52 in FIG. 4). The double-hump characteristic, to be more specific, means that the reflection characteristic "S11" measured with the network analyzer 110 connected to the wireless power transmission apparatus has two peaks. Therefore, even if the transmission characteristic S21 relative to the driving frequency appears to have a single peak, the transmission characteristic "S21" has a double-hump characteristic if the reflection characteristic S11 measured has two peaks.

In a wireless power transmission apparatus 1 having the single-hump characteristic, the transmission characteristic "S21" is maximized (power transmission efficiency is maximized) when the driving frequency is at the resonance frequency f0, as indicated by the dotted line 51 of FIG. 4.

On the other hand, in a wireless power transmission apparatus 1 having the double-hump characteristic, the transmission characteristic "S21" is maximized in a driving frequency band (fL) lower than the resonance frequency f0, and in a driving frequency band (fH) higher than the resonance frequency f0, as indicated by the solid line 52 of FIG. 4.

It should be noted that, in general, if the distance between the power-supplying resonator and the power-receiving resonator is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at f0) (See graph in FIG. 4).

Specifically, in cases of double-hump characteristic, when the driving frequency of the AC power to the power-supplying module 2 is set to the frequency fL nearby the peak on the low frequency side (inphase resonance mode), the power-supplying resonator 22 and the power-receiving resonator 32 are resonant with each other in inphase, and the current in the power-supplying resonator 22 and the current in the power-receiving resonator 32 both flow in the same direction. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode.

Further, in the inphase resonance mode, because the magnetic field generated on the outer circumference side of the power-supplying resonator 22 and the magnetic field generated on the outer circumference side of the power-receiving resonator 32 cancel each other out, the magnetic field spaces each having a lower magnetic field strength than the magnetic field strengths in positions not on the outer circumference sides of the power-supplying resonator 22 and the power-receiving resonator 32 (e.g. , the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a lithium ion secondary battery 9, and the like desired to have less influence of the magnetic field are placed in this magnetic field space, occurrence of Eddy Current attributed to the magnetic field is restrained or prevented for these members. This restrains negative effects due to generation of heat.

On the other hand, in cases of double-hump characteristic, when the driving frequency of the AC power to the power-supplying module 2 is set to the frequency fH nearby the peak on the side of the high frequency side (antiphase resonance mode), the power-supplying resonator 22 and the power-receiving resonator 32 resonate with each other in antiphase, and the current in the power-supplying resonator 22 and the current in the power-receiving resonator 32 flow opposite directions to each other. As the result, as shown in the graph of FIG. 4, the value of the transmission characteristic S21 is made relatively high, even if the driving frequency does not match with the resonance frequency of the power-supplying resonator 22 of the power-supplying module 2 and the power-receiving resonator 32 of the power-receiving module 3, although the value still may not be as high as that of the transmission characteristic S21 in wireless power transmission apparatuses in general aiming at maximizing the power transmission efficiency (see dotted line 51). The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode.

Further, in the antiphase resonance mode, because the magnetic field generated on the inner circumference side of the power-supplying resonator 22 and the magnetic field generated on the inner circumference side of the power-receiving resonator 32 cancel each other out, the magnetic field spaces each having a lower magnetic field strength than the magnetic field strengths in positions not on the inner circumference side of the power-supplying resonator 22 and the power-receiving resonator 32 (e.g. , the magnetic field strengths on the outer circumference side of the power-supplying resonator 22 and the power-receiving resonator 32) are formed on the outer circumference sides of the power-supplying resonator 22 and the power-receiving resonator 32, as the influence of the magnetic fields is lowered. When a stabilizer circuit 7, a charging circuit 8, a lithium ion secondary battery 9, and the like desired to have less influence of the magnetic field are placed in this magnetic field space, occurrence of Eddy Current attributed to the magnetic field is restrained or prevented for these members. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the lithium ion secondary battery 9, and the like within this space makes the wireless power transmission apparatus 1 itself more compact, and improves the freedom in designing.

(Measurement Experiment 1: Load Fluctuation Response of $Z_{in}$ when Coupling Coefficient $k_{12}$ is Varied)

In the wireless power transmission apparatus 1 used in the measurement experiment 1, the power-supplying coil 21 is constituted by an RL circuit (non-resonating) including a resistor $R_1$ and a coil $L_1$. The coil $L_1$ is a single-turn coil of a copper wire material (coated by an insulation film) with its coil diameter set to 96 mm$\phi$. Similarly, the power-receiving coil 31 constitutes an RL circuit (non-resonating) including a resistor $R_4$ and a coil $L_4$. The coil $L_4$ is a single-turn coil of a copper wire material (coated by an insulation film) with its coil diameter set to 96 mm$\phi$. Further, the power-supplying resonator 22 is constituted by an RLC circuit including a resistor $R_2$, a coil $L_2$, and a capacitor $C_2$, and adopts a solenoid coil formed by winding four times a copper wire material (coated by an insulation film) with its diameter set to 96 mm$\phi$. Further, the power-receiving resonator 32 is constituted by an RLC circuit including a resistor $R_3$, a coil $L_3$, and a capacitor $C_3$, and adopts a 4-turn solenoid coil of a copper wire material (coated by an insulation film) with its diameter set to 96 mm$\phi$. The values of $R_1$, $R_2$, $R_3$, $R_4$ in the wireless power transmission apparatus 1 used in Measurement Experiment 1 were set to 0.05$\Omega$, 0.5$\Omega$, 0.5$\Omega$, and 0.05$\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively. The resonance frequency of the power-supplying resonator 22 and that of the power-receiving resonator 32 was 12.8 MHz.

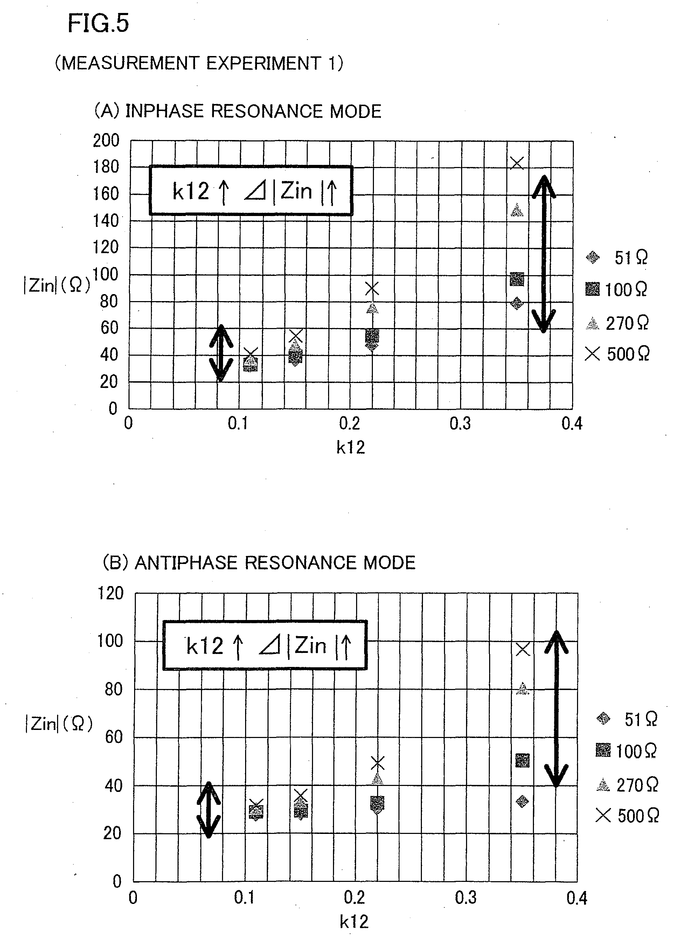

In the measurement experiment 1, the coupling coefficients $k_{23}$ and $k_{34}$ were fixed to 0.10 and 0.35, respectively, and while the value of the variable resistor 11 ($R_l$) was changed among four values, i.e., 51 $\Omega$, 100 $\Omega$, 270 $\Omega$, and 500 $\Omega$, the values of the input impedance $Z_{in}$ of the wireless power transmission apparatus 1 was measured with the coupling coefficient $k_{12}$ set to four values, i.e., 0.11, 0.15, 0.22, and 0.35 (the method of adjusting the coupling coefficient is detailed later) . FIG. 5(A) shows values resulting from measurements with the driving frequency of the AC power to the power-supplying module 2 set to the frequency fL nearby the peak on the low frequency side of the double-hump characteristic (inphase resonance mode: 12.2 MHz). FIG. 5(B) shows values resulting from measurements with the driving frequency of the AC power to the power-supplying module 2 set to the frequency fH nearby the peak on the high frequency side of the double-hump characteristic (antiphase resonance mode: 13.4 MHz). Changing the value of the variable resistor 11 ($R_l$) among the four values, i.e., 51 $\Omega$, 100 $\Omega$, 270 Q, 500 $\Omega$ in the measurement, simulates a phenomenon in which the value of the supplied current is reduced, raising the value of the load impedance $Z_l$ of the power-supplied electronic device (stabilizer circuit 7, charging circuit 8, lithium ion secondary battery 9) during the constant voltage charging, as in FIG. 3 (B) showing the load fluctuation characteristic of the load impedance $Z_l$.

As should be seen in the measurement results in the inphase resonance mode shown in FIG. 5(A), when the coupling coefficient $k_{12}$ is set to 0.11 and when the value of the variable resistor 11 ($R_l$) is raised in the sequence of 51 $\Omega \to$ 100 $\Omega$ --> 270 $\Omega \to$ 500 $\Omega$, the value of the input impedance $Z_{in}$ of the wireless power transmission apparatus 1 rose as follows: 31.4 $\Omega$ --> 33.1 $\Omega$ --> 37.8 $\Omega$ --> 40.9 $\Omega$. In this case, an amount of variation in the input impedance $Z_{in}$ was 40.9 -31.4 = 9.5 $\Omega$ when the value of the variable resistor 11 ($R_l$) rose from 51 $\Omega$ to 500 $\Omega$. Further, when the coupling coefficient $k_{12}$ is set to 0.15 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 35.9 $\Omega$ --> 39.0 $\Omega$ --> 48.2 $\Omega$ --> 54.5 $\Omega$. In this case, an amount of variation in the input impedance $Z_{in}$ was 54.5-35.9 = 18.6 $\Omega$ when the value of the variable resistor 11 ($R_l$) rose from 51 $\Omega$ to 500 $\Omega$.

Further, when the coupling coefficient $k_{12}$ is set to 0.22 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 47.5 $\Omega$ --> 54.8 $\Omega$ --> 76.0 $\Omega$ --> 90.1 $\Omega$. In this case, an amount of variation in the input impedance $Z_{in}$ was 90.1-47.5 = 42.6 $\Omega$ when the value of the variable resistor 11 ($R_l$) rose from 51 $\Omega$ to 500 $\Omega$.

Further, when the coupling coefficient $k_{12}$ is set to 0.35 and when the value of the variable resistor 11 ($R_l$) is raised in the sequence of 51 $\Omega$ --> 100 $\Omega \to$ 270 $\Omega$ --> 500 $\Omega$, the value of the input impedance $Z_{in}$ of the wireless power transmission apparatus 1 rose as follows: 79.0 $\Omega$ --> 97.1 $\Omega$ --> 148.5 $\Omega$ --> 183.1 $\Omega$. In this case, an amount of variation in the input impedance $Z_{in}$ was 183.1-79.0 = 104.1 $\Omega$ when the value of the variable resistor 11 ($R_l$) rose from 51 $\Omega$ to 500 $\Omega$.

As should be understood from the above, raising the value of the coupling coefficient $k_{12}$ in a sequence of 0.11 --> 0.15 --> 0.22 --> 0.35 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{12}$ is reduced in a sequence of 0.35 --> 0.22 --> 0.15 $\to$ 0.11.

Similarly, as should be seen in the measurement results in the antiphase resonance mode shown in FIG. 5(B), when the coupling coefficient $k_{12}$ is set to 0.11 and when the value of the variable resistor 11 ($R_l$) is raised in the sequence of 51 $\Omega \to$ 100 $\Omega$ --> 270 $\Omega$ --> 500 $\Omega$, the value of the input impedance $Z_{in}$ of the wireless power transmission apparatus 1 rose as follows: 27.5 $\Omega$ --> 28.7 $\Omega \to$ 30.7 $\Omega$ --> 31.8 $\Omega$. In this case, an amount of variation in the input impedance $Z_{in}$ was 31.8-27.5 = 4.3 $\Omega$ when the value of the variable resistor 11 ($R_l$) rose from 51 $\Omega$ to 500 $\Omega$. Further, when the coupling coefficient $k_{12}$ is set to 0.15 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 28.1 $\Omega$ --> 29.4 $\Omega \to$ 33.5 $\Omega$ --> 35.8 $\Omega$. In this case, an amount of variation in the input impedance $Z_{in}$ was 35.8-28.1 = 7.7 $\Omega$ when the value of the variable resistor 11 ($R_l$) rose from 51 $\Omega$ to 500 $\Omega$.

Further, when the coupling coefficient $k_{12}$ is set to 0.22 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 30.2 $\Omega \to$ 32.6 $\Omega$ --> 43.0 $\Omega$ --> 49.1 $\Omega$. In this case, an amount of variation in the input impedance $Z_{in}$ was 49.1-30.2 = 18.9 $\Omega$ when the value of the variable resistor 11 ($R_l$) rose from 51 $\Omega$ to 500 $\Omega$.

Further, when the coupling coefficient $k_{12}$ is set to 0.35 and when the value of the variable resistor 11 ($R_l$) is raised in the sequence of 51 $\Omega \to$ 100 $\Omega$ --> 270 $\Omega$ --> 500 $\Omega$, the value of the input impedance $Z_{in}$ of the wireless power transmission apparatus 1 rose as follows: 33.3 $\Omega \to$ 50.3 $\Omega \to$ 80.6 $\Omega \to$ 96.7 $\Omega$. In this case, an amount of variation in the input impedance $Z_{in}$ was 96.7-33.3 = 63.4 $\Omega$ when the value of the variable resistor 11 ($R_l$) rose from 51 $\Omega$ to 500 $\Omega$.

As should be understood from the above, raising the value of the coupling coefficient $k_{12}$ in a sequence of 0.11 --> 0.15 --> 0.22 --> 0.35 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device) . To the contrary, the load fluctuation response tends to be reduced, when the coupling coefficient $k_{12}$ is reduced in a sequence of 0.35 --> 0.22 --> 0.15 --> 0.11.

(Measurement Experiment 2: Load Fluctuation Response of $Z_{in}$ when Coupling Coefficient $k_{12}$ is Varied)

In the wireless power transmission apparatus 1 used in the measurement experiment 2, the power-supplying coil 21 is constituted by an RLC circuit (resonating) including a resistor $R_1$, a coil $L_1$, and a capacitor $C_1$, unlike the measurement experiment 1. The coil $L_1$ is a single-turn coil of a copper wire material (coated by an insulation film) with its coil diameter set to 96 mm$\phi$. Similarly, the power-receiving coil 31 is constituted by an RLC circuit whose elements

include a resistor $R_4$, a coil $L_4$, and a capacitor $C_4$. The coil $L_4$ is a single-turn coil of a copper wire material (coated by insulation film) with its coil diameter set to 96 mmϕ. The other structures are the same as those in Measurement Experiment 1. The values of $R_1$, $R_2$, $R_3$, $R_4$ in the wireless power transmission apparatus 2 used in Measurement Experiment 2 were set to 0.05Ω, 0.5Ω, 0.5Ω, and 0.05Ω, respectively. Further, the values of $L_1$, $L_2$, $L_3$, $L_4$ were set to 0.3 μH, 4 μH, 4 μH, and 0.3 μH, respectively. The resonance frequency of the power-supplying coil 21, the power-supplying resonator 22, the power-receiving resonator 32, and the power-receiving coil 31 was 12.8 MHz.

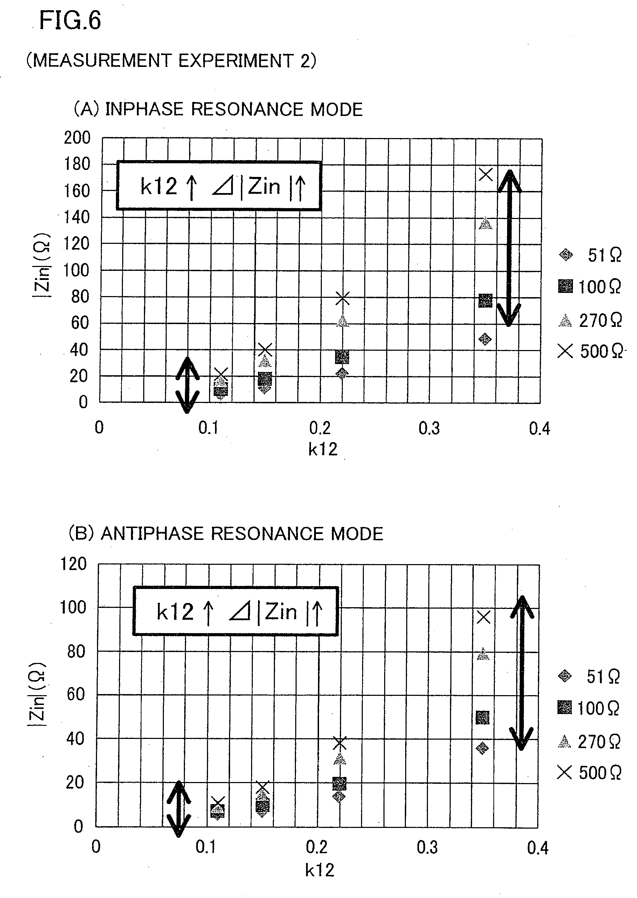

In the measurement experiment 2, the coupling coefficients $k_{23}$ and $k_{34}$ were fixed to 0.10 and 0.35, respectively, and while the value of the variable resistor 11 ($R_l$) was changed among four values, i.e., 51 Ω, 100 Ω, 270 Ω, and 500 Ω, the values of the input impedance $Z_{in}$ of the wireless power transmission apparatus 1 was measured with the coupling coefficient $k_{12}$ set to four values, i.e., 0.11, 0.15, 0.22, and 0.35 (the method of adjusting the coupling coefficient is detailed later). FIG. 6 (A) shows values resulting from measurements with the driving frequency of the AC power to the power-supplying module 2 set to the frequency fL nearby the peak on the low frequency side of the double-hump characteristic (inphase resonance mode: 12.2 MHz). FIG. 6 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 6 (A), when the coupling coefficient $k_{12}$ is set to 0.11 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 6.5 Ω --> 10.0 Ω --> 17.3 Ω --> 21.8 Ω. In this case, an amount of variation in the input impedance $Z_{in}$ was 21.8-6.5 = 15.3 Ω when the value of the variable resistor 11 ($R_1$) rose from 51 Ω to 500 Ω.

Further, when the coupling coefficient $k_{12}$ is set to 0.15 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 11.5 Ω → 18.1 Ω → 31.8 Ω → 40.3 Ω. In this case, an amount of variation in the input impedance $Z_{in}$ was 40.3-11.5 = 28.8 Ω when the value of the variable resistor 11 ($R_l$) rose from 51 Ω to 500 Ω.

Further, when the coupling coefficient $k_{12}$ is set to 0.22 and when the value of the variable resistor 11 ($R_l$) is raised in the sequence of 51 Ω → 100 Ω --> 270 Ω --> 500 Ω, the value of the input impedance $Z_{in}$ of the wireless power transmission apparatus 1 rose as follows: 22.4 Ω → 35.4 Ω → 62.2 Ω → 79.0 Ω. In this case, an amount of variation in the input impedance $Z_{in}$ was 79.0-22.4 = 56.6 Ω when the value of the variable resistor 11 ($R_l$) rose from 51 Ω to 500 Ω.

Further, when the coupling coefficient $k_{12}$ is set to 0.35 and when the value of the variable resistor 11 ($R_l$) is raised in the sequence of 51 Ω → 100 Ω --> 270 Ω --> 500 Ω, the value of the input impedance $Z_{in}$ of the wireless power transmission apparatus 1 rose as follows: 48.8 Ω --> 77.6 Ω --> 136.5 Ω --> 173.1 Ω. In this case, an amount of variation in the input impedance $Z_{in}$ was 173.1-48.8 = 124.3 Ω when the value of the variable resistor 11 ($R_l$) rose from 51 Ω to 500 Ω.

As should be understood from the above, raising the value of the coupling coefficient $k_{12}$ in a sequence of 0.11 --> 0.15 --> 0.22 → 0.35 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{12}$ is reduced in a sequence of 0.35 --> 0.22 --> 0.15 → 0.11.

Similarly, as should be seen in the measurement results in the antiphase resonance mode shown in FIG. 6 (B), when the coupling coefficient $k_{12}$ is set to 0.11 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 5.5 Ω --> 6.9 Ω → 9.3 Ω --> 10.7 Ω. In this case, an amount of variation in the input impedance $Z_{in}$ was 10.7-5.5 = 5.2 Ω when the value of the variable resistor 11 ($R_l$) rose from 51 Ω to 500 Ω.

Further, when the coupling coefficient $k_{12}$ is set to 0.15 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 6.8 Ω --> 9.5 Ω --> 14.9 Ω --> 18.0 Ω. In this case, an amount of variation in the input impedance $Z_{in}$ was 18.0-6.8 = 11.2 Ω when the value of the variable resistor 11 ($R_l$) rose from 51 Ω to 500 Ω.

Further, when the coupling coefficient $k_{12}$ is set to 0.22 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 13.6 Ω → 19.3 Ω → 31.2 Ω → 38.1 Ω. In this case, an amount of variation in the input impedance $Z_{in}$ was 38.1-13.6 = 24.5 Ω when the value of the variable resistor 11 ($R_l$) rose from 51 Ω to 500 Ω.

Further, when the coupling coefficient $k_{12}$ is set to 0.35 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 35.9 Ω --> 49.8 Ω → 79.0 Ω --> 95.9 Ω. In this case, an amount of variation in the input impedance $Z_{in3}$ was 95.9-35.9 = 60.0 Ω when the value of the variable resistor 11 ($R_1$) rose from 51 Ω to 500 Ω.

As should be understood from the above, raising the value of the coupling coefficient $k_{12}$ in a sequence of 0.11 --> 0.15 --> 0.22 --> 0.35 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device) . To the contrary, the load fluctuation response tends to be reduced, when the coupling coefficient $k_{12}$ is reduced in a sequence of 0.35 --> 0.22 --> 0.15 --> 0.11.

(Measurement Experiment 3 : Load Fluctuation Response of $Z_{in}$ when Coupling Coefficient $k_{12}$ is Varied)

The wireless power transmission apparatus 1 used in Measurement Experiment 3, unlike Measurement Experiments 1 and 2, adopts a pattern coil formed by winding a coil in a planer manner on a coil part of the power-supplying coil 21, the power-supplying resonator 22, the power-receiving resonator 32, and the power-receiving coil 31. Further, the power-supplying coil 21 is constituted by an RLC circuit (resonating) whose elements include a resistor $R_1$, a coil $L_1$, and a capacitor $C_1$. The coil $L_1$ is a 12-turn pattern coil with its coil diameter set to 35 mmϕ, which is formed by etching involving a copper foil. Further, the power-receiving coil 31 is constituted by an RLC circuit whose elements include a resistor $R_4$, a coil $L_4$, and a capacitor $C_4$. The coil $L_4$ is a 12-turn pattern coil with its coil diameter set to 35 mmϕ, which is formed by etching involving a copper foil. Further, the power-supplying resonator 22 is constituted by an RLC circuit whose elements include a resistor $R_2$, a coil $L_2$, and a capacitor $C_2$. The coil $L_2$ is a 12-turn pattern coil with its coil diameter set to 35 mmϕ, which is formed by etching involving a copper foil. Further, the power-receiving resonator 32 is constituted by an RLC circuit whose elements include a resistor $R_3$, a coil $L_3$, and a capacitor $C_3$. The coil $L_3$ is a 12-turn pattern coil with its coil diameter set to 35 mmϕ, which is formed by etching involving a copper foil. The values of $R_1$, $R_2$, $R_3$, $R_4$ in the wireless power transmission apparatus 1 used in Measurement Experiment 3 were set to 1.8 Ω, 1.8 Ω, 1.8 Ω, and 1.8 Ω, respectively. Further, the values of $L_1$, $L_2$, $L_3$, $L_4$ were set to 2.5 µH, 2.5 µH, 2.5 µH, and 2.5 µH, respectively. The resonance frequency of the power-supplying coil 21, the power-supplying resonator 22, the power-receiving resonator 32, and the power-receiving coil 31 was 8.0 MHz.

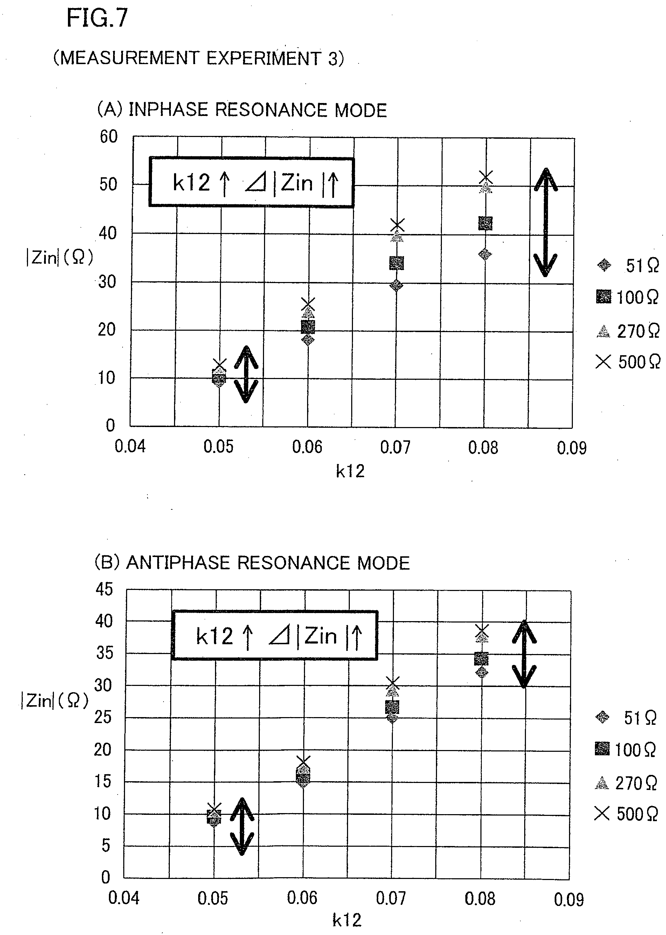

In the measurement experiment 3, the coupling coefficients $k_{23}$ and $k_{34}$ were fixed to 0.05 and 0.08, respectively, and while the value of the variable resistor 11 ($R_l$) was changed among four values, i.e., 51 Ω, 100 Ω, 270 Ω, and 500 Ω, the values of the input impedance $Z_{in}$ of the wireless power transmission apparatus 1 was measured with the coupling coefficient $k_{12}$ set to four values, i.e., 0.05, 0.06, 0.07, and 0.08 (the method of adjusting the coupling coefficient is detailed later) . FIG. 7 (A) shows values resulting from measurements with the driving frequency of the AC power to the power-supplying module 2 set to the frequency fL nearby the peak on the low frequency side of the double-hump characteristic (inphase resonance mode: 7.9 MHz). FIG. 7 (B) shows values resulting from measurements with the driving frequency of the AC power to the power-supplying module 2 set to the frequency fH nearby the peak on the high frequency side of the double-hump characteristic (antiphase resonance mode: 8.2 MHz).

As should be seen in the measurement results in the inphase resonance mode shown in FIG. 7 (A), when the coupling coefficient $k_{12}$ is set to 0.05 and when the value of the variable resistor 11 ($R_l$) is raised in the sequence of 51 Ω → 100 Ω → 270 Ω → 500 Ω, the value of the input impedance $Z_{in}$ of the wireless power transmission apparatus 1 rose as follows: 9.1 Ω --> 10.5 Ω --> 12.3 Ω --> 12.8 Ω. In this case, an amount of variation in the input impedance $Z_{in}$ was 12.8-9.1 = 3.7 Ω when the value of the variable resistor 11 ($R_l$) rose from 51 Ω to 500 Ω. Further, when the coupling coefficient $k_{12}$ is set to 0.06 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 18.0 Ω --> 20.7 Ω --> 24.0 Ω --> 25.4 Ω. In this case, an amount of variation in the input impedance $Z_{in}$ was 25.4-18.0 = 7.4 Ω when the value of the variable resistor 11 ($R_l$) rose from 51 Ω to 500 Ω. Further, when the coupling coefficient $k_{12}$ is set to 0.07 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 29.5 Ω → 34.1 Ω --> 39.8 Ω --> 41.9 Ω. In this case, an amount of variation in the input impedance $Z_{in}$ was 41.9-29.5 = 12.4 Ω when the value of the variable resistor 11 ($R_l$) rose from 51 Ω to 500 Ω.

Further, when the coupling coefficient $k_{12}$ is set to 0.08 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 35.9 Ω → 42.3 Ω → 49.9 Ω → 51.9 Ω. In this case, an amount of variation in the input impedance $Z_{in}$ was 51.9-35.9 = 16.0 Ω when the value of the variable resistor 11 ($R_l$) rose from 51 Ω to 500 Ω.

As should be understood from the above, raising the value of the coupling coefficient $k_{12}$ in a sequence of 0.05 --> 0.06 --> 0.07 --> 0.08 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{12}$ is reduced in a sequence of 0.08 --> 0.07 --> 0.06 --> 0.05.

Similarly, as should be seen in the measurement results in the antiphase resonance mode shown in FIG. 7 (B), when the coupling coefficient $k_{12}$ is set to 0.05 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 8.7 Ω --> 9.5 Ω --> 10.5 Ω --> 10.8 Ω. In this case, an amount of variation in the input

impedance $Z_{in}$ was 10.8-8.7 = 2.1 $\Omega$ when the value of the variable resistor 11 ($R_l$) rose from 51 $\Omega$ to 500 $\Omega$.

Further, when the coupling coefficient $k_{12}$ is set to 0.06 and when the value of the variable resistor 11 ($R_l$) is raised in the sequence of 51 $\Omega$ --> 100 $\Omega$ → 270 $\Omega$ --> 500 $\Omega$, the value of the input impedance $Z_{in}$ of the wireless power transmission apparatus 1 rose as follows: 14.9 $\Omega$ → 15.8 $\Omega$ → 17.3 $\Omega$ --> 18.0 $\Omega$. In this case, an amount of variation in the input impedance $Z_{in}$ was 18.0-14.9 = 3.1 $\Omega$ when the value of the variable resistor 11 ($R_l$) rose from 51 $\Omega$ to 500 $\Omega$.

Further, when the coupling coefficient $k_{12}$ is set to 0.07 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 25.0 $\Omega$ → 26.6 $\Omega$ --> 29.4 $\Omega$ --> 30.5 $\Omega$. In this case, an amount of variation in the input impedance $Z_{in}$ was 30.5-25.0 = 5.5 $\Omega$ when the value of the variable resistor 11 ($R_l$) rose from 51 $\Omega$ to 500 $\Omega$.

Further, when the coupling coefficient $k_{12}$ is set to 0.08 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 32.1 $\Omega$ --> 34.2 $\Omega$ --> 37.8 $\Omega$ --> 38.7 $\Omega$. In this case, an amount of variation in the input impedance $Z_{in}$ was 38.7-32.1 = 6.6 $\Omega$ when the value of the variable resistor 11 ($R_l$) rose from 51 $\Omega$ to 500 $\Omega$.

As should be understood from the above, raising the value of the coupling coefficient $k_{12}$ in a sequence of 0.05 --> 0.06 --> 0.07 --> 0.08 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{12}$ is reduced in a sequence of 0.08 --> 0.07 --> 0.06 --> 0.05.

(Measurement Experiment 4: Load Fluctuation Response of $Z_{in}$ when Coupling Coefficient $k_{34}$ is Varied)

In the wireless power transmission apparatus 1 used in the measurement experiment 4, similarly to Measurement Experiment 1, the power-supplying coil 21 is constituted by an RL circuit (non-resonating) including a resistor $R_1$ and a coil $L_1$. The coil $L_1$ is a single-turn coil of a copper wire material (coated by an insulation film) with its coil diameter set to 96 mm$\phi$. Similarly, the power-receiving coil 31 constitutes an RL circuit (non-resonating) including a resistor $R_4$ and a coil $L_4$. The coil $L_4$ is a single-turn coil of a copper wire material (coated by an insulation film) with its coil diameter set to 96 mm$\phi$. The other structures are the same as those in Measurement Experiment 1. The values of $R_1$, $R_2$, $R_3$, $R_4$ in the wireless power transmission apparatus 4 used in Measurement Experiment 4 were set to 0.05$\Omega$, 0.5$\Omega$, 0.5$\Omega$, and 0.05$\Omega$, respectively. Further, the values of $L_1$, $L_2$, $L_3$, $L_4$ were set to 0.3 $\mu$H, 4 $\mu$H, 4 $\mu$H, and 0.3 $\mu$H, respectively (the same as Measurement experiment 1). The resonance frequency of the power-supplying resonator 22 and that of the power-receiving resonator 32 was 12.8 MHz.

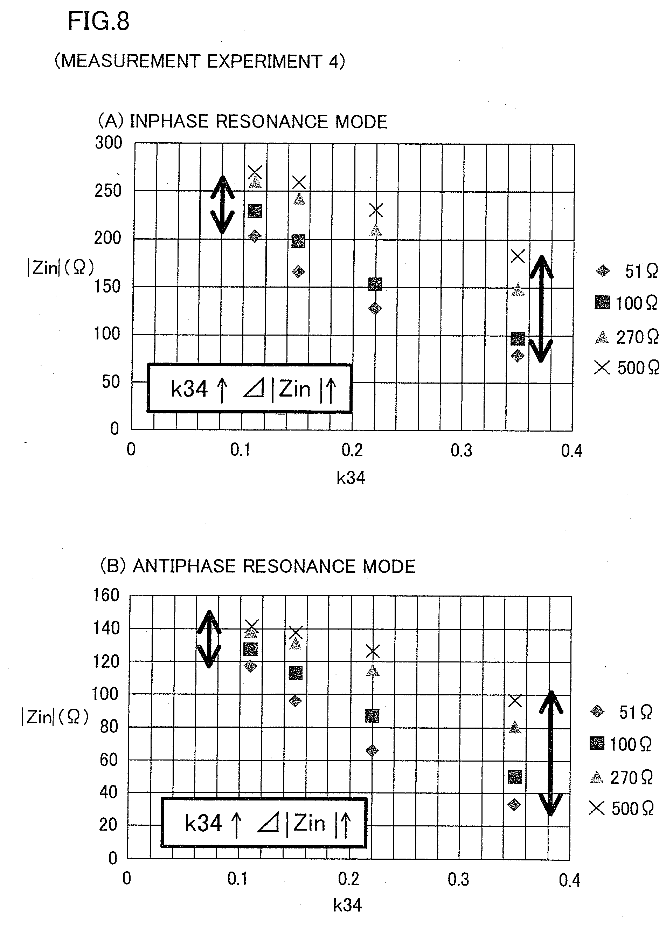

In the measurement experiment 4, the coupling coefficients $k_{12}$ and $k_{23}$ were fixed to 0.35 and 0.10, respectively, and while the value of the variable resistor 11 ($R_l$) was changed among four values, i.e., 51 $\Omega$, 100 $\Omega$, 270 $\Omega$, and 500 $\Omega$, the values of the input impedance $Z_{in}$ of the wireless power transmission apparatus 1 was measured with the coupling coefficient $k_{34}$ set to four values, i.e., 0.11, 0.15, 0.22, and 0.35 (the method of adjusting the coupling coefficient is detailed later). FIG. 8 (A) shows values resulting from measurements with the driving frequency of the AC power to the power-supplying module 2 set to the frequency fL nearby the peak on the low frequency side of the double-hump characteristic (inphase resonance mode: 12.2MHz). FIG. 8 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 8 (A), when the coupling coefficient $k_{34}$ is set to 0.11 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 202.5 $\Omega$ --> 228.2 $\Omega$ --> 259.1 $\Omega$ --> 269.2 $\Omega$. In this case, an amount of variation in the input impedance $Z_{in}$ was 269.2-202.5 = 66.7 $\Omega$ when the value of the variable resistor 11 ($R_l$) rose from 51 $\Omega$ to 500 $\Omega$. Further, when the coupling coefficient $k_{34}$ is set to 0.15 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 165.8 $\Omega$ --> 197.7 $\Omega$ --> 242.0 $\Omega$ --> 259.3 $\Omega$. In this case, an amount of variation in the input impedance $Z_{in}$ was 259.3-165.8 = 93.5 $\Omega$ when the value of the variable resistor 11 ($R_l$) rose from 51 $\Omega$ to 500 $\Omega$.

Further, when the coupling coefficient $k_{34}$ is set to 0.22 and when the value of the variable resistor 11 ($R_l$) is raised in the sequence of 51 $\Omega$ --> 100 $\Omega$ --> 270 $\Omega$ → 500 $\Omega$, the value of the input impedance $Z_{in}$ of the wireless power transmission apparatus 1 rose as follows: 127.4 $\Omega$ --> 152.8 $\Omega$ --> 209.7 $\Omega$ --> 230.2 $\Omega$. In this case, an amount of variation in the input impedance $Z_{in}$ was 230.2-127.4 = 102.8 $\Omega$ when the value of the variable resistor 11 ($R_l$) rose from 51 $\Omega$ to 500 $\Omega$.

Further, when the coupling coefficient $k_{34}$ is set to 0.35 and when the value of the variable resistor 11 ($R_l$) is raised in the sequence of 51 $\Omega$ --> 100 $\Omega$ → 270 $\Omega$ --> 500 $\Omega$, the value of the input impedance $Z_{in}$ of the wireless power transmission apparatus 1 rose as follows: 79.0 $\Omega$ --> 97.1 $\Omega$ --> 148.5 $\Omega$ --> 183.1 $\Omega$. In this case, an amount of variation in the input impedance $Z_{in}$ was 183.1-79.0 = 104.1 Ω when the value of the variable resistor 11 ($R_l$) rose from 51 Ω to 500 Ω.

As should be understood from the above, raising the value of the coupling coefficient $k_{34}$ in a sequence of 0.11 --> 0.15 --> 0.22 --> 0.35 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{34}$ is reduced in a sequence of 0.35 --> 0.22 --> 0.15 --> 0.11.

Similarly, as should be seen in the measurement results in the antiphase resonance mode shown in FIG. 8 (B), when the coupling coefficient $k_{34}$ is set to 0.11 and when the value of the variable resistor 11 ($R_l$) is raised in the sequence of 51 Ω → 100 Ω → 270 Ω --> 500 Ω, the value of the input impedance $Z_{in}$ of the wireless power transmission apparatus 1 rose as follows: 117.1 Ω --> 127.4 Ω --> 138.0 Ω --> 141.3 Ω. In this case, an amount of variation in the input impedance $Z_{in}$ was 141.3-117.1 = 24.2 Ω when the value of the variable resistor 11 ($R_l$) rose from 51 Ω to 500 Ω.

Further, when the coupling coefficient $k_{34}$ is set to 0.15 and when the value of the variable resistor 11 (Ri) is raised in the sequence of 51 Ω --> 100 Ω --> 270 Ω --> 500 Ω, the value of the input impedance $Z_{in}$ of the wireless power transmission apparatus 1 rose as follows: 96.1 Ω --> 112.8 Ω --> 131.1 Ω --> 137.6 Q. In this case, an amount of variation in the input impedance $Z_{in}$ was 137.6-96.1 = 41.5 Ω when the value of the variable resistor 11 ($R_l$) rose from 51 Ω to 500 Ω.

Further, when the coupling coefficient $k_{34}$ is set to 0.22 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 66.1 Ω → 86.8 Ω → 115.0 Ω → 126.5 Ω. In this case, an amount of variation in the input impedance $Z_{in}$ was 126.5-66.1 = 60.4 Ω when the value of the variable resistor 11 ($R_l$) rose from 51 Ω to 500 Ω.

Further, when the coupling coefficient $k_{34}$ is set to 0.35 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 33.3 Ω → 50.3 Ω → 80.6 Ω --> 96.7 Ω. In this case, an amount of variation in the input impedance $Z_{in}$ was 96.7-33.3 = 63.4 Ω when the value of the variable resistor 11 ($R_l$) rose from 51 Ω to 500 Ω.

As should be understood from the above, raising the value of the coupling coefficient $k_{34}$ in a sequence of 0.11 --> 0.15 --> 0.22 --> 0.35 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device) . To the contrary, the load fluctuation response tends to be reduced, when the coupling coefficient $k_{34}$ is reduced in a sequence of 0.35 --> 0.22 --> 0.15 --> 0.11.


(Measurement Experiment 5: Load Fluctuation Response of $Z_{in}$ when Coupling Coefficient $k_{34}$ is Varied)


In the wireless power transmission apparatus 1 used in the measurement experiment 5, unlike Measurement Experiment 4, the power-supplying coil 21 is constituted by an RLC circuit (resonating) including a resistor $R_1$, a coil $L_1$, and a capacitor $C_1$. The coil $L_1$ is a single-turn coil of a copper wire material (coated by an insulation film) with its coil diameter set to 96 mmϕ. Similarly, the power-receiving coil 31 is constituted by an RLC circuit whose elements include a resistor $R_4$, a coil $L_4$, and a capacitor $C_4$. The coil $L_4$ is a single-turn coil of a copper wire material (coated by insulation film) with its coil diameter set to 9 6 mmϕ. The other structures are the same as those in Measurement Experiment 4. The values of $R_1$, $R_2$, $R_3$, $R_4$ in the wireless power transmission apparatus 5 used in Measurement Experiment 5 were set to 0.05Ω, 0.5Ω, 0.5Ω, and 0.05Ω, respectively. Further, the values of $L_1$, $L_2$, $L_3$, $L_4$ were set to 0.3 μH, 4 μH, 4 μH, and 0.3 μH, respectively. The resonance frequency of the power-supplying coil 21, the power-supplying resonator 22, the power-receiving resonator 32, and the power-receiving coil 31 was 12.8 MHz.

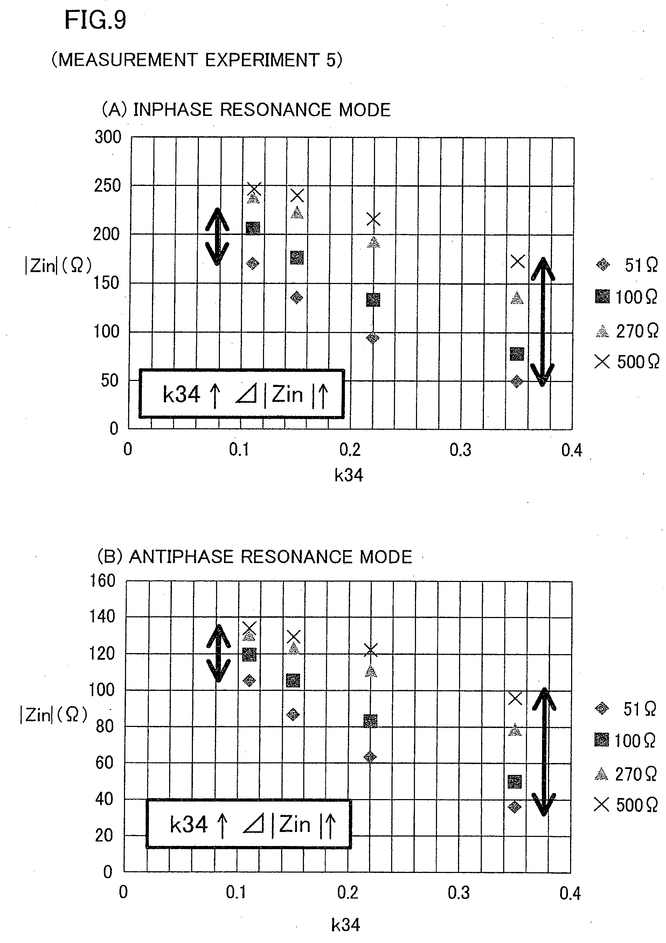

In the measurement experiment 5, the coupling coefficients $k_{12}$ and $k_{23}$ were fixed to 0.35 and 0.10, respectively, and while the value of the variable resistor 11 ($R_l$) was changed among four values, i.e., 51 Ω, 100 Ω, 270 Ω, and 500 Ω, the values of the input impedance $Z_{in}$ of the wireless power transmission apparatus 1 was measured with the coupling coefficient $k_{34}$ set to four values, i.e., 0.11, 0.15, 0.22, and 0.35 (the method of adjusting the coupling coefficient is detailed later). FIG. 9 (A) shows values resulting from measurements with the driving frequency of the AC power to the power-supplying module 2 set to the frequency fL nearby the peak on the low frequency side of the double-hump characteristic (inphase resonance mode: 12.2MHz). FIG. 9 (B) shows values resulting from measurements with the driving frequency of the AC power to the power-supplying module 2 set to the frequency fH nearby the peak on the high frequency side of the double-hump characteristic (antiphase resonance mode: 13.4 MHz).

As should be seen in the measurement results in the inphase resonance mode shown in FIG. 9 (A), when the coupling coefficient $k_{34}$ is set to 0.11 and when the value of the variable resistor 11 ($R_l$) is raised in the sequence of 51 Ω --> 100 Ω --> 270 Ω --> 500 Ω, the value of the input impedance $Z_{in}$ of the wireless power transmission apparatus 1 rose as follows: 170.5 Ω --> 204.9 Ω --> 238.0 Ω --> 246.7 Ω. In this case, an amount of variation in the input impedance $Z_{in}$ was 246.7-170.5 = 76.2 Ω when the value of the variable resistor 11 ($R_l$) rose from 51 Ω to 500 Ω. Further, when the coupling coefficient $k_{34}$ is set to 0.15 and when the value of the variable resistor 11 ($R_l$) is raised in the sequence of 51

$\Omega$ --> 100 $\Omega$ --> 270 $\Omega$ --> 500 $\Omega$, the value of the input impedance $Z_{in}$ of the wireless power transmission apparatus 1 rose as follows: 134.9 $\Omega$ → 176.5 $\Omega$ --> 222.8 $\Omega$ → 239.7 $\Omega$. In this case, an amount of variation in the input impedance $Z_{in}$ was 239.7-134.9 = 104.8 $\Omega$ when the value of the variable resistor 11 ($R_l$) rose from 51 $\Omega$ to 500 $\Omega$.

Further, when the coupling coefficient $k_{34}$ is set to 0.22 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 94.2 $\Omega$ --> 133.4 $\Omega$ --> 193.8 $\Omega$ --> 216.2 $\Omega$. In this case, an amount of variation in the input impedance $Z_{in}$ was 216.2-94.2 = 122.0 $\Omega$ when the value of the variable resistor 11 ($R_l$) rose from 51 $\Omega$ to 500 $\Omega$.

Further, when the coupling coefficient $k_{34}$ is set to 0.35 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 48.8 $\Omega$ --> 77.6 $\Omega$ --> 136.5 $\Omega$ --> 173.1 $\Omega$. In this case, an amount of variation in the input impedance $Z_{in}$ was 173.1-48.8 = 124.3 $\Omega$ when the value of the variable resistor 11 ($R_l$) rose from 51 $\Omega$ to 500 $\Omega$.

As should be understood from the above, raising the value of the coupling coefficient $k_{34}$ in a sequence of 0.11 --> 0.15 --> 0.22 --> 0.35 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{34}$ is reduced in a sequence of 0.35 --> 0.22 --> 0.15 --> 0.11.

Similarly, as should be seen in the measurement results in the antiphase resonance mode shown in FIG. 9 (B), when the coupling coefficient $k_{34}$ is set to 0.11 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 105.5 $\Omega$ --> 119.3 $\Omega$ --> 130.6 $\Omega$ --> 133.9 $\Omega$. In this case, an amount of variation in the input impedance $Z_{in}$ was 133.9-105.5 = 28.4 $\Omega$ when the value of the variable resistor 11 ($R_l$) rose from 51 $\Omega$ to 500 $\Omega$. Further, when the coupling coefficient $k_{34}$ is set to 0.15 and when the value of the variable resistor 11 ($R_l$) is raised in the sequence of 51 $\Omega$ --> 100 $\Omega$ --> 270 $\Omega$ → 500 $\Omega$, the value of the input impedance $Z_{in}$ of the wireless power transmission apparatus 1 rose as follows: 86.6 $\Omega$ --> 105.2 $\Omega$ --> 123.4 $\Omega$ --> 129.3 $\Omega$. In this case, an amount of variation in the input impedance $Z_{in}$ was 129.3-86.6 = 42.7 $\Omega$ when the value of the variable resistor 11 ($R_l$) rose from 51 $\Omega$ to 500 $\Omega$. Further, when the coupling coefficient $k_{34}$ is set to 0.22 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 63.0 $\Omega$ --> 83.3 $\Omega$ --> 110.9 $\Omega$ --> 122.1 $\Omega$. In this case, an amount of variation in the input impedance $Z_{in}$ was 122.1-63.0 = 59.1 $\Omega$ when the value of the variable resistor 11 ($R_l$) rose from 51 $\Omega$ to 500 $\Omega$.

Further, when the coupling coefficient $k_{34}$ is set to 0.35 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 35.9 $\Omega$ → 49.8 $\Omega$ --> 79.0 $\Omega$ --> 95.9 $\Omega$. In this case, an amount of variation in the input impedance $Z_{in}$ was 95.9-35.9 = 60.0 $\Omega$ when the value of the variable resistor 11 ($R_l$) rose from 51 $\Omega$ to 500 $\Omega$.

As should be understood from the above, raising the value of the coupling coefficient $k_{34}$ in a sequence of 0.11 --> 0.15 --> 0.22 --> 0.35 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device) . To the contrary, the load fluctuation response tends to be reduced, when the coupling coefficient $k_{34}$ is reduced in a sequence of 0.35 --> 0.22 --> 0.15 --> 0.11.


(Measurement Experiment 6: Load Fluctuation Response of $Z_{in}$ when Coupling Coefficient $k_{34}$ is Varied)


The wireless power transmission apparatus 1 used in Measurement Experiment 6, unlike Measurement Experiments 4 and 5, adopts a pattern coil formed by winding a coil in a planer manner on a coil part of the power-supplying coil 21, the power-supplying resonator 22, the power-receiving resonator 32, and the power-receiving coil 31. Further, the power-supplying coil 21 is constituted by an RLC circuit (resonating) whose elements include a resistor $R_1$, a coil $L_1$, and a capacitor $C_1$. The coil $L_1$ is a 12-turn pattern coil with its coil diameter set to 35 mm$\phi$, which is formed by etching a copper foil. Further, the power-receiving coil 31 is constituted by an RLC circuit whose elements include a resistor $R_4$, a coil $L_4$, and a capacitor $C_4$. The coil $L_4$ is a 12-turn pattern coil with its coil diameter set to 35 mm$\phi$, which is formed by etching a copper foil. Further, the power-supplying resonator 22 is constituted by an RLC circuit whose elements include a resistor $R_2$, a coil $L_2$, and a capacitor $C_2$. The coil $L_2$ is a 12-turn pattern coil with its coil diameter set to 35 mm$\phi$, which is formed by etching a copper foil. Further, the power-receiving resonator 32 is constituted by an RLC circuit whose elements include a resistor $R_3$, a coil $L_3$, and a capacitor $C_3$. The coil $L_3$ is a 12-turn pattern coil with its coil diameter set to 35 mm$\phi$, which is formed by etching a copper foil. The values of $R_1, R_2, R_3, R_4$ in the wireless power transmission apparatus 1 used in Measurement Experiment 6 were set to 1.8 $\Omega$, 1.8 $\Omega$, 1.8 $\Omega$, and 1.8 $\Omega$, respectively. Further, the values of $L_1, L_2, L_3, L_4$ were set to 2.5 $\mu$H, 2.5 $\mu$H, 2.5 $\mu$H, and 2.5 $\mu$H, respectively. The resonance frequency of the power-supplying coil 21, the power-supplying resonator 22, the power-receiving resonator 32, and the power-receiving coil 31 was 8.0 MHz.

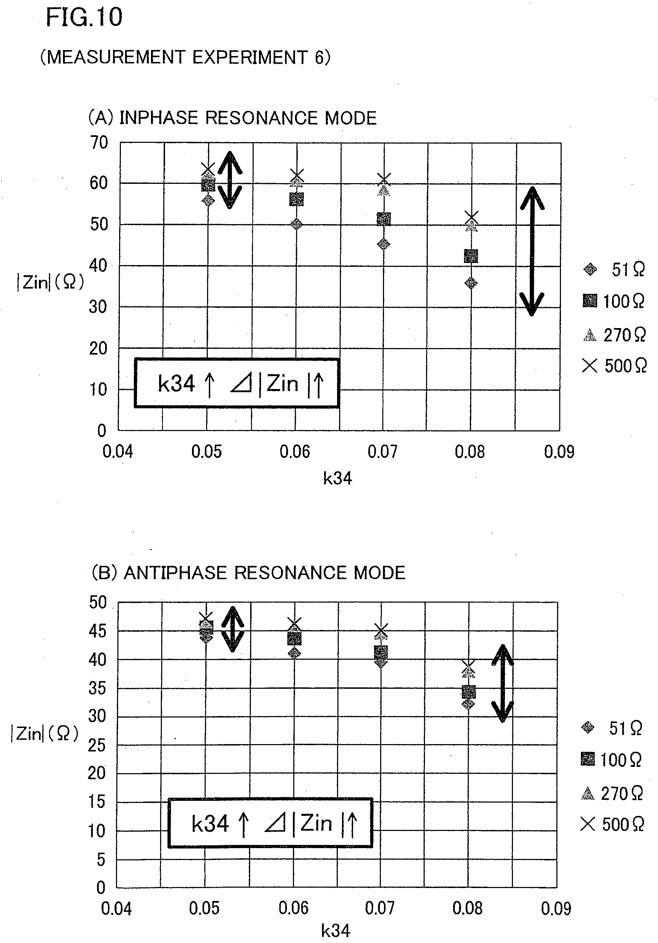

In the measurement experiment 6, the coupling coefficients $k_{12}$ and $k_{23}$ were fixed to 0.08 and 0.05, respectively, and while the value of the variable resistor 11 ($R_l$) was changed among four values, i.e., 51 $\Omega$, 100 $\Omega$, 270 $\Omega$, and 500 $\Omega$, the values of the input impedance $Z_{in}$ of the wireless power transmission apparatus 1 was measured with the coupling coefficient $k_{34}$ set to four values, i.e., 0.05, 0.06, 0.07, and 0.08 (the method of adjusting the coupling coefficient is detailed later). FIG. 10 (A) shows values resulting from measurements with the driving frequency of the AC power to the power-supplying module 2 set to the frequency fL nearby the peak on the low frequency side of the double-hump characteristic (inphase resonance mode: 7.9 MHz). FIG. 10 (B) shows values resulting from measurements with the driving frequency of the AC power to the power-supplying module 2 set to the frequency fH nearby the peak on the high frequency side of the double-hump characteristic (antiphase resonance mode: 8.2 MHz).

As should be seen in the measurement results in the inphase resonance mode shown in FIG. 10 (A), when the coupling coefficient $k_{34}$ is set to 0.05 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 55.8 $\Omega$ --> 59.7 $\Omega$ --> 62.6 $\Omega$ --> 63.5 $\Omega$. In this case, an amount of variation in the input impedance $Z_{in}$ was 63.5-55.8 = 7.7 $\Omega$ when the value of the variable resistor 11 ($R_l$) rose from 51 $\Omega$ to 500 $\Omega$.

Further, when the coupling coefficient $k_{34}$ is set to 0.06 and when the value of the variable resistor 11 ($R_l$) is raised in the sequence of 51 $\Omega$ --> 100 $\Omega$ --> 270 $\Omega$ → 500 $\Omega$, the value of the input impedance $Z_{in}$ of the wireless power transmission apparatus 1 rose as follows: 50.2 $\Omega$ → 56.1 $\Omega$ → 60.6 $\Omega$ → 62.0 $\Omega$. In this case, an amount of variation in the input impedance $Z_{in}$ was 62.0-50.2 = 11.8 $\Omega$ when the value of the variable resistor 11 ($R_l$) rose from 51 $\Omega$ to 500 $\Omega$.

Further, when the coupling coefficient $k_{34}$ is set to 0.07 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 45.3 $\Omega$ → 51.4 $\Omega$ --> 58.6 $\Omega$ --> 61.0 $\Omega$. In this case, an amount of variation in the input impedance $Z_{in}$ was 61.0-45.3 = 15.7 $\Omega$ when the value of the variable resistor 11 ($R_l$) rose from 51 $\Omega$ to 500 $\Omega$.

Further, when the coupling coefficient $k_{34}$ is set to 0.08 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 35.9 $\Omega$ --> 42.3 $\Omega$ --> 49.9 $\Omega$ --> 51.9 $\Omega$. In this case, an amount of variation in the input impedance $Z_{in}$ was 51.9-35.9 = 16.0 $\Omega$ when the value of the variable resistor 11 ($R_l$) rose from 51 $\Omega$ to 500 $\Omega$.

As should be understood from the above, raising the value of the coupling coefficient $k_{34}$ in a sequence of 0.05 --> 0.06 --> 0.07 → 0.08 in the inphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{34}$ is reduced in a sequence of 0.08 --> 0.07 --> 0.06 --> 0.05.

Similarly, as should be seen in the measurement results in the antiphase resonance mode shown in FIG. 10 (B), when the coupling coefficient $k_{34}$ is set to 0.05 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 43.9 $\Omega$ --> 45.6 $\Omega$ --> 46.8 $\Omega$ --> 47.1 $\Omega$. In this case, an amount of variation in the input impedance $Z_{in}$ was 47.1-43.9 = 3.2 $\Omega$ when the value of the variable resistor 11 ($R_l$) rose from 51 $\Omega$ to 500 $\Omega$.

Further, when the coupling coefficient $k_{34}$ is set to 0.06 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 41.0 $\Omega$ → 43.7 $\Omega$ --> 45.7 $\Omega$ → 46.2 $\Omega$. In this case, an amount of variation in the input impedance $Z_{in}$ was 46.2-41.0 = 5.2 $\Omega$ when the value of the variable resistor 11 ($R_l$) rose from 51 $\Omega$ to 500 $\Omega$.

Further, when the coupling coefficient $k_{34}$ is set to 0.07 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 39.4 $\Omega$ → 41.2 $\Omega$ → 44.6 $\Omega$ → 45.1 $\Omega$. In this case, an amount of variation in the input impedance $Z_{in}$ was 45.1-39.4 = 5.7 $\Omega$ when the value of the variable resistor 11 ($R_l$) rose from 51 $\Omega$ to 500 $\Omega$.

Further, when the coupling coefficient $k_{34}$ is set to 0.08 and when the value of the variable resistor 11 ($R_l$) is raised in the sequence of 51 $\Omega$ --> 100 $\Omega$ --> 270 $\Omega$ --> 500 $\Omega$, the value of the input impedance $Z_{in}$ of the wireless power transmission apparatus 1 rose as follows: 32.1 $\Omega$ --> 34.2 $\Omega$ --> 37.8 $\Omega$ --> 38.7 $\Omega$. In this case, an amount of variation in the input impedance $Z_{in}$ was 38.7-32.1 = 6.6 $\Omega$ when the value of the variable resistor 11 ($R_l$) rose from 51 $\Omega$ to 500 $\Omega$.

As should be understood from the above, raising the value of the coupling coefficient $k_{34}$ in a sequence of 0.05 --> 0.06 --> 0.07 --> 0.08 in the antiphase resonance mode causes a tendency of a higher load fluctuation response, i.e., the amount of variation in the value of the input impedance $Z_{in}$ of the wireless power transmission apparatus 1 with respect to the amount of variation in the value of the variable resistor 11 ($R_l$) (load impedance of the power-supplied electronic device). To the contrary, the load fluctuation response tends to be reduced, when the coupling coefficient $k_{34}$ is reduced in a sequence of 0.08 --> 0.07 --> 0.06 --> 0.05.

As should be understood from the above-described Measurement Experiments 1 to 6, in a wireless power transmission apparatus 1 having a power-supplying coil 21, a power-supplying resonator 22, a power-receiving resonator 32, and a power-receiving coil 31, the load fluctuation response is raised by raising the value of the coupling coefficient between coils adjacent to each other, e.g. , the coupling coefficient $k_{12}$ or $k_{34}$, and the load fluctuation response is lowered by reducing the value of the coupling coefficient $k_{12}$ or $k_{34}$.

(Method of Adjusting Coupling Coefficient)

The following describes a method of adjusting the coupling coefficients $k_{12}$ and $k_{34}$, which are each a parameter for adjusting the load fluctuation response of an input impedance $Z_{in}$ in the wireless power transmission apparatus 1.

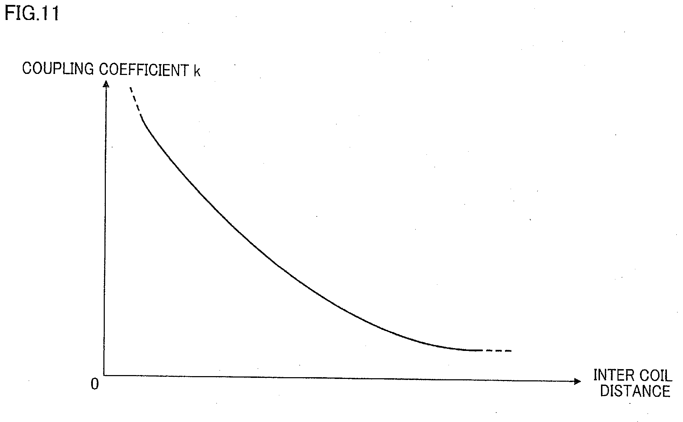

In wireless power transmission, the relation between a coupling coefficient k and a distance between a coil and another coil is typically such that the value of the coupling coefficient k increases with a decrease in (shortening of) the distance between the coil and the other coil, as shown in FIG. 11. In the wireless power transmission apparatus 1 of the present embodiment for instance, the coupling coefficient $k_{12}$ between the power-receiving coil 21 (coil $L_1$) and the power-supplying resonator 22 (coil $L_2$), the coupling coefficient $k_{23}$ between the power-supplying resonator 22 (coil $L_2$) and the power-receiving resonator 32 (coil $L_3$), and the coupling coefficient $K_{34}$ between the power-receiving resonator 32 (coil $L_3$) and the power-receiving coil 31 (coil $L_4$) are increased by reducing a distance d12 between the power-supplying coil 21 and the power-supplying resonator 22, a distance d23 between the power-supplying resonator 22 and the power-receiving resonator 32, and a distance d34 between the power-receiving resonator 32 and the power-receiving coil 31. To the contrary, the coupling coefficient $k_{12}$ between the power-receiving coil 21 (coil $L_1$) and the power-supplying resonator 22 (coil $L_2$), the coupling coefficient $k_{23}$ between the power-supplying resonator 22 (coil $L_2$) and the power-receiving resonator 32 (coil $L_3$), and the coupling coefficient $K_{34}$ between the power-receiving resonator 32 (coil $L_3$) and the power-receiving coil 31 (coil $L_4$) are lowered by extending a distance d12 between the power-supplying coil 21 and the power-supplying resonator 22 , a distance d23 between the power-supplying resonator 22 and the power-receiving resonator 32, and a distance d34 between the power-receiving resonator 32 and the power-receiving coil 31.

As should be understood from the measurement experiments for variation in the input impedance $Z_{in}$ due to variation in the coupling coefficient, with the above method for adjusting the coupling coefficient, if the distance d23 between the power-supplying resonator 22 and the power-receiving resonator 32 and the distance d34 between the power-receiving resonator 32 and the power-receiving coil 31 are fixed, the value of the coupling coefficient $k_{12}$ between the power-supplying coil 21 and the power-supplying resonator 22 is increased with a decrease in the distance d12 between the power-supplying coil 21 and the power-supplying resonator 22. Increasing the value of the coupling coefficient $k_{12}$ raises the load fluctuation response of the input impedance $Z_{in}$ in the wireless power transmission apparatus 1. To the contrary, by increasing the distance d12 between the power-supplying coil 21 and the power-supplying resonator 22, the value of the coupling coefficient $k_{12}$ between the power-supplying coil 21 and the power-supplying resonator 22 is reduced. Reduction of the value of the coupling coefficient $k_{12}$ lowers the load fluctuation response of the input impedance $Z_{in}$ in the wireless power transmission apparatus 1.

Further, if the distance d12 between the power-supplying coil 21 and the power-supplying resonator 22 and the distance d23 between the power-supplying resonator 22 and the power-receiving resonator 32 are fixed, the value of the coupling coefficient $k_{34}$ between the power-receiving resonator 32 and the power-receiving coil 31 is increases with a decrease in the distance d34 between the power-receiving resonator 32 and the power-receiving coil 31. Increasing the value of the coupling coefficient $k_{34}$ raises the load fluctuation response of the input impedance $Z_{in}$ in the wireless power transmission apparatus 1. To the contrary, by increasing the distance d34 between the power-receiving resonator 32 and the power-receiving coil 31, the value of the coupling coefficient $k_{34}$ between the power-receiving resonator 32 and the power-receiving coil 31 is reduced. Reduction of the value of the coupling coefficient $k_{34}$ lowers the load fluctuation response of the input impedance $Z_{in}$ in the wireless power transmission apparatus 1.

If the load fluctuation response is raised, the amount of variation in the value of the input impedance $Z_1$ in the wireless power transmission apparatus 1 with respect to the variation of the load impedance $Z_1$ in the power-supplied electronic device is increased. Therefore, for example, when the load impedance in the power-supplied electronic device $Z_1$ is increased, the value of the input impedance $Z_{in}$ in the wireless power transmission apparatus is raised significantly, following the increase in the load impedance $Z_{in}$ of the power-supplied electronic device, and the power supplied at the time is reduced (power consumption is reduced). On the other hand, if the load fluctuation response is reduced, the amount of variation in the value of the input impedance $Z_{in}$ in the wireless power transmission apparatus 1 with respect to the variation of the load impedance $Z_1$ in the power-supplied electronic device 1 is reduced. Therefore, the value of the input impedance $Z_{in}$ in the wireless power transmission apparatus 1 is maintained, even if there is variation in the load impedance $Z_1$ of the power-supplied electronic device 1, and the power supplied at the time is maintained.

Further, it is possible to vary the values of coupling coefficients between coils, simply by physically varying the distance d12 between the power-supplying coil 21 and the power-supplying resonator 22, the distance d23 between the power-supplying resonator 22 and the power-receiving resonator 32, and the distance d34 between the power-receiving resonator 32 and the power-receiving coil 31. In other words, it is possible to adjust the load fluctuation response of an input impedance $Z_{in}$ in a wireless power transmission apparatus 1, simply by physically varying the distance d12 between the power-supplying coil 21 and the power-supplying resonator 22 and the distance d34 between the power-receiving resonator 32 and the power-receiving coil 31.

Further, with the above method, the structure allows adjustment of the load fluctuation response of the input impedance $Z_{in}$ in the wireless power transmission apparatus 1, without a need of an additional device such as an impedance adjuster. In other words, adjustment of the load fluctuation response of the input impedance $Z_{in}$ in a wireless power transmission apparatus 1 is possible without a need of an additional component in the wireless power transmission apparatus 1.

It should be noted that a case of varying the distance d12 between the power-supplying coil 21 and the power-supplying resonator 22 and the distance d34 between the power-receiving resonator 32 and the power-receiving coil 31 was described above as an example method for adjusting the coupling coefficients $k_{12}$ and $k_{34}$ which adjust the load fluctuation response of the input impedance $Z_{in}$ in the wireless power transmission apparatus 1. The method of adjusting the coupling coefficients $k_{12}$, $k_{23}$, and $k_{34}$ is not limited to this. For example, the following approaches are possible: disposing the power-supplying resonator 22 and the power-receiving resonator 32 so their axes do not match with each other; giving an angle to the coil surfaces of the power-supplying resonator 22 and the power-receiving resonator 32; varying the property of each element (resistor, capacitor, coil) of the power-supplying coil 21, the power-supplying resonator 22, the power-receiving resonator 32, and the power-receiving coil 31; varying the driving frequency of the AC power supplied to a power-supplying module 2.

(Manufacturing Method)

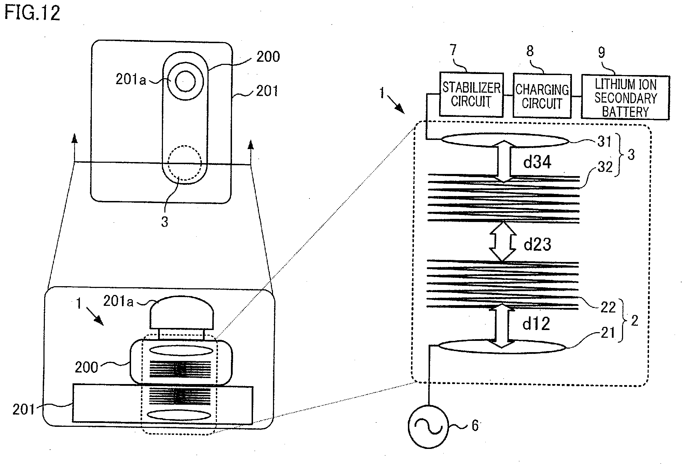

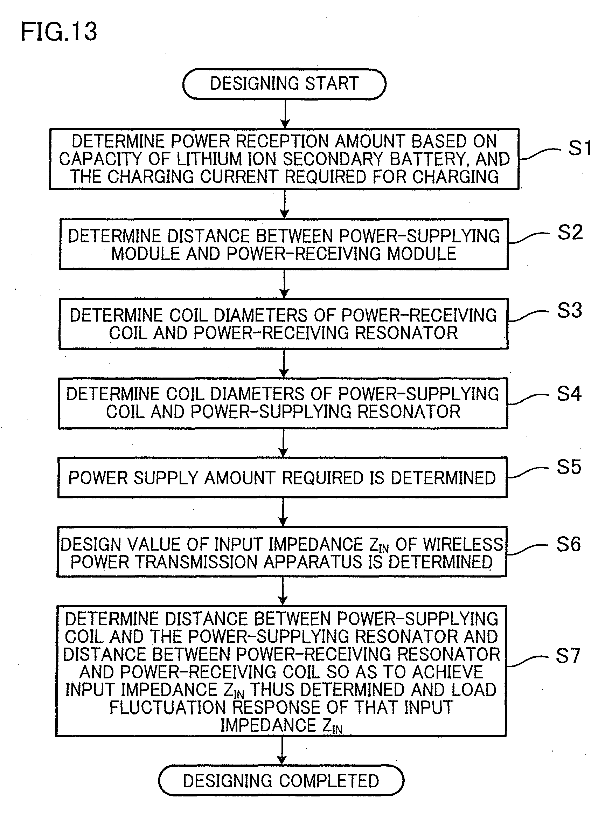

Next, the following describes with reference to FIG. 12 and FIG. 13 a design method (design process) which is a part of manufacturing process of the wireless power transmission apparatus 1. In the following description, an RF headset 200 having an earphone speaker unit 200a, and a charger 201 are described as a portable device having the wireless power transmission apparatus 1 (see FIG. 12).

The wireless power transmission apparatus 1 to be designed in the design method is implemented in an RF headset 200 and a charger 201 shown in FIG. 12, in the form of a power-receiving module 3 (a power-receiving coil 31 and a power-receiving resonator 32) and a power-supplying module 2 (a power-supplying coil 21 and a power-supplying resonator 22), respectively. For the sake of convenience, FIG. 12 illustrates the stabilizer circuit 7, the charging circuit 8, and the lithium ion secondary battery 9 outside the power-receiving module 3 ; however, these are actually disposed on the inner circumference side of the solenoid power-receiving coil 31 and the coil of the power-receiving resonator 32. That is, the RF headset 200 includes the power-receiving module 3, the stabilizer circuit 7, the charging circuit 8, and the lithium ion secondary battery 9, and the charger 201 has a power-supplying module 2. While in use, the power-supplying coil 21 of the power-supplying module 2 is connected to an AC power source 6.

(Design Method)

First, as shown in FIG. 13, a power reception amount in the power-receiving module 3 is determined based on the capacity of the lithium ion secondary battery 9, and the charging current required for charging the lithium ion secondary battery 9 (S1).

Next, the distance between the power-supplying module 2 and the power-receiving module 3 is determined (S2) . The distance is the distance d23 between the power-supplying resonator 22 and the power-receiving resonator 32, while the RF headset 200 having therein the power-receiving module 3 is placed on the charger 201 having therein the power-supplying module 2, i.e., during the charging state. To be more specific, the distance d23 between the power-supplying resonator 22 and the power-receiving resonator 32 is determined, taking into account the shapes and the structures of the RF headset 200 and the charger 201.

Further, based on the shape and the structure of the RF headset 200, the coil diameters of the power-receiving coil 31 in the power-receiving module 3 and the coil of the power-receiving resonator 32 are determined (S3).

Further, based on the shape and the structure of the charger 201, the coil diameters of the power-supplying coil 21 in the power-supplying module 2 and the coil of the power-supplying resonator 22 are determined (S4).

Through the steps of S2 to S4, the coupling coefficient $K_{23}$ and the power transmission efficiency between the power-supplying resonator 22 (coil $L_2$) of the wireless power transmission apparatus 1 and the power-receiving resonator 32 (coil $L_3$) are determined.

Based on the power reception amount in the power-receiving module 3 determined in S1 and on the power transmission efficiency determined through S2 to S4, the minimum power supply amount required for the power-supplying module 2 is determined (S5).

Then, the design values of the input impedance $Z_{in}$ in the wireless power transmission apparatus 1 is determined, taking into account the power reception amount in the power-receiving module 3, the power transmission efficiency, and the minimum power supply amount required to the power-supplying module 2 (S6).

Then, the distance d12 between the power-supplying coil 21 and the power-supplying resonator 22 and the distance d34 between the power-receiving resonator 32 and the power-receiving coil 31 are determined so as to achieve the input impedance $Z_{in}$ determined in S6 and the load fluctuation response of the input impedance $Z_{in}$(S7). Specifically, to determine the distance d12 between the power-supplying coil 21 and the power-supplying resonator 22 and the distance d34 between the power-receiving resonator 32 and the power-receiving coil 31 are determined so as to achieve the input impedance $Z_{in}$ determined in S6 and the load fluctuation response of the input impedance $Z_{in}$, an adjustment is conducted based on the characteristic that the load fluctuation response of the input impedance $Z_{in}$ of the wireless power transmission apparatus 1 rises, by reducing the distance d12 between the power-supplying coil 21 and the power-supplying resonator 22 when the distance d23 between the power-supplying resonator 22 and the power-receiving resonator 32 and the distance d34 between the power-receiving resonator 32 and the power-receiving coil 31 are fixed, or by reducing the distance d34 between the power-receiving resonator 32 and the power-receiving coil 31 when the distance d12 between the power-supplying coil 21 and the power-supplying resonator 22 and the distance d23 between the power-supplying resonator 22 and the power-receiving resonator 32 are fixed.

The above-described manufacturing method of the wireless power transmission apparatus 1 including the above design method enables manufacturing of a wireless power transmission apparatus 1 that allows control of load fluctuation response of the input impedance $Z_{in}$ thereof without a need of an additional device. In other words, adjustment of the load fluctuation response of the input impedance $Z_{in}$ in a wireless power transmission apparatus 1 is possible without a need of an additional component in the wireless power transmission apparatus 1.

(Other Embodiments)

Although the above description of the manufacturing method deals with an RF headset 200 as an example, the method is applicable to any devices having a rechargeable battery; e.g., tablet PCs, digital cameras, mobile phone phones, earphone-type music player, hearing aids, and sound collectors.

Although the above description deals with a wireless power transmission apparatus 1 configured to perform power transmission by means of magnetic coupling using a resonance phenomenon (magnetic field resonant state) between resonators (coils) provided to a power-supplying module 2 and a power-receiving module 3, the present invention is applicable to a wireless power transmission apparatus 1 configured to perform power transmission by using electromagnetic induction between coils.

Further, although the above description assumes the wireless power transmission apparatus 1 is mounted in a portable electronic device, the use of such an apparatus is not limited to small devices. For example, with a modification to the specifications according to the required power amount, the wireless power transmission apparatus 1 is mountable to a relatively large system such as a wireless charging system in an electronic vehicle (EV), or to an even smaller device such as a wireless endoscope for medical use.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

Reference Signs List

1       Wireless Power Transmission Apparatus
2       Power-Supplying Module
3       Power-Receiving Module
6       AC power source
7       Stabilizer Circuit
8       Charging Circuit
9       Lithium Ion Secondary Battery
21      Power-Supplying Coil
22      Power-Supplying Resonator

31    Power-Receiving Coil
32    Power-Receiving Resonator
200   RF Headset
201   Charger

**Claims**

1.  A method of adjusting a load fluctuation response of an input impedance in a wireless power transmission apparatus configured to cause variation in a magnetic field to supply power from a power-supplying module to a power-receiving module connected to a power-supplied electronic device which consumes the power, wherein
    the power-supplying module and the power-receiving module each has at least one coil, and
    the load fluctuation response is adjusted by adjusting values of coupling coefficients between the coils arranged side-by-side, the load fluctuation response being an amount of variation in the input impedance of the wireless power transmission apparatus relative to a unit variation amount of a load impedance of the power-supplied electronic device.

2.  The method according to claim 1, wherein the method of adjusting the load fluctuation response of the input impedance in a wireless power transmission apparatus is configured to supply power, by means of a resonance phenomenon, from a power-supplying module comprising at least a power-supplying coil and a power-supplying resonator to a power-receiving module comprising at least a power-receiving resonator and a power-receiving coil, the power-receiving module connected to a power-supplied electronic device which consumes the power, and
    the load fluctuation response is adjusted by adjusting at least one of a coupling coefficient $k_{12}$ between the power-supplying coil and the power-supplying resonator, a coupling coefficient $k_{23}$ between the power-supplying resonator and the power-receiving resonator, and a coupling coefficient $k_{34}$ between the power-receiving resonator and the power-receiving coil.

3.  The method according to claim 2, wherein the values of the coupling coefficients $k_{12}$, $k_{23}$, and $k_{34}$ are adjusted by varying at least one of a distance between the power-supplying coil and the power-supplying resonator, a distance between the power-supplying resonator and the power-receiving resonator, and a distance between power-receiving resonator and the power-receiving coil.

4.  The method according to claim 3, wherein: the adjustment is based on a characteristic such that, if the distance between the power-supplying resonator and the power-receiving resonator, and the distance between the power-receiving resonator and the power-receiving coil are fixed,
    the load fluctuation response is such that
    the value of the coupling coefficient $k_{12}$ between the power-supplying coil and the power-supplying resonator increases with a decrease in the distance between the power-supplying coil and the power-supplying resonator, and the load fluctuation response of the input impedance in the wireless power transmission apparatus rises with the increase in the value of the coupling coefficient $k_{12}$.

5.  The method according to claim 3, wherein the adjustment is based on a characteristic such that, if the distance between the power-supplying coil and the power-supplying resonator, and the distance between the power-supplying resonator and the power-receiving resonator are fixed,
    the load fluctuation response is such that
    the value of the coupling coefficient $k_{34}$ between the power-receiving resonator and the power-receiving coil increases with a decrease in the distance between the power-receiving resonator and the power-receiving coil, and the load fluctuation response of the input impedance in the wireless power transmission apparatus rises with the increase in the value of the coupling coefficient $k_{34}$.

6.  The method according to any one of claims 2 to 5, wherein a transmission characteristic with respect to a driving frequency of the power supplied to the power-supplying module has a peak occurring in a drive frequency band lower than a resonance frequency of the power-supplying module and the power-receiving module, and a peak occurring in a drive frequency band higher than the resonance frequency, and
    the driving frequency of the power supplied to the power-supplying module is in a band corresponding to a peak value of the transmission characteristic occurring in a driving frequency band lower than the resonance frequency.

7.  The method according to any one of claims 2 to 5, wherein a transmission characteristic with respect to a driving frequency of the power supplied to the power-supplying module has a peak occurring in a drive frequency band lower than a resonance frequency of the power-supplying module and the power-receiving module, and a peak occurring in a drive frequency band higher than the resonance frequency, and

the driving frequency of the power supplied to the power-supplying module is in a band corresponding to a peak value of the transmission characteristic occurring in a driving frequency band higher than the resonance frequency.

8. A wireless power transmission apparatus which is adjusted by the method of adjusting the load fluctuation response of an input impedance according to any one of claims 1 to 5.

9. A wireless power transmission apparatus which is adjusted by the method of adjusting the load fluctuation response of an input impedance according to claim 6.

10. A wireless power transmission apparatus which is adjusted by the method of adjusting the load fluctuation response of an input impedance according to claim 7.

11. A method of manufacturing a wireless power transmission apparatus configured to cause variation in a magnetic field to supply power from a power-supplying module to a power-receiving module connected to a power-supplied electronic device which consumes the power, comprising:

   providing at least one coil in each of the power-supplying module and the power-receiving module, and adjusting the load fluctuation response by adjusting values of coupling coefficients between the coils arranged side-by-side, the load fluctuation response being an amount of variation in the input impedance of the wireless power transmission apparatus relative to a unit variation amount of a load impedance of the power-supplied electronic device.

## FIG.1

$$I_{in} = V_{in} / Z_{in}$$

FIG.2

# FIG.3

CC  CV

(A)

CHARGING TIME (min)

CC  CV

(B)

CHARGING TIME (min)

FIG.4

# FIG.5

(MEASUREMENT EXPERIMENT 1)

(A) INPHASE RESONANCE MODE

(B) ANTIPHASE RESONANCE MODE

## FIG.6

(MEASUREMENT EXPERIMENT 2)

(A) INPHASE RESONANCE MODE

(B) ANTIPHASE RESONANCE MODE

# FIG.7

(MEASUREMENT EXPERIMENT 3)

### (A) INPHASE RESONANCE MODE

### (B) ANTIPHASE RESONANCE MODE

# FIG.8

(MEASUREMENT EXPERIMENT 4)

(A) INPHASE RESONANCE MODE

(B) ANTIPHASE RESONANCE MODE

# FIG.9

(MEASUREMENT EXPERIMENT 5)

(A) INPHASE RESONANCE MODE

(B) ANTIPHASE RESONANCE MODE

# FIG.10

(MEASUREMENT EXPERIMENT 6)

(A) INPHASE RESONANCE MODE

(B) ANTIPHASE RESONANCE MODE

FIG.11

COUPLING COEFFICIENT k

0

INTER COIL
DISTANCE

FIG.12

# FIG.13

```
        ┌─────────────────────────┐
        │     DESIGNING START     │
        └─────────────────────────┘
                    │
                    ▼
  ┌──────────────────────────────────────────────┐
  │ DETERMINE POWER RECEPTION AMOUNT BASED ON     │
  │ CAPACITY OF LITHIUM ION SECONDARY BATTERY, AND│──── S1
  │ THE CHARGING CURRENT REQUIRED FOR CHARGING    │
  └──────────────────────────────────────────────┘
                    │
                    ▼
  ┌──────────────────────────────────────────────┐
  │ DETERMINE DISTANCE BETWEEN POWER-SUPPLYING    │──── S2
  │    MODULE AND POWER-RECEIVING MODULE          │
  └──────────────────────────────────────────────┘
                    │
                    ▼
  ┌──────────────────────────────────────────────┐
  │ DETERMINE COIL DIAMETERS OF POWER-RECEIVING   │──── S3
  │    COIL AND POWER-RECEIVING RESONATOR         │
  └──────────────────────────────────────────────┘
                    │
                    ▼
  ┌──────────────────────────────────────────────┐
  │ DETERMINE COIL DIAMETERS OF POWER-SUPPLYING   │──── S4
  │    COIL AND POWER-SUPPLYING RESONATOR         │
  └──────────────────────────────────────────────┘
                    │
                    ▼
  ┌──────────────────────────────────────────────┐
  │ POWER SUPPLY AMOUNT REQUIRED IS DETERMINED    │──── S5
  └──────────────────────────────────────────────┘
                    │
                    ▼
  ┌──────────────────────────────────────────────┐
  │ DESIGN VALUE OF INPUT IMPEDANCE $Z_{IN}$ OF WIRELESS │──── S6
  │ POWER TRANSMISSION APPARATUS IS DETERMINED    │
  └──────────────────────────────────────────────┘
                    │
                    ▼
  ┌──────────────────────────────────────────────┐
  │ DETERMINE DISTANCE BETWEEN POWER-SUPPLYING    │
  │ COIL AND THE POWER-SUPPLYING RESONATOR AND    │
  │ DISTANCE BETWEEN POWER-RECEIVING RESONATOR    │──── S7
  │ AND POWER-RECEIVING COIL SO AS TO ACHIEVE     │
  │ INPUT IMPEDANCE $Z_{IN}$ THUS DETERMINED AND LOAD │
  │ FLUCTUATION RESPONSE OF THAT INPUT            │
  │            IMPEDANCE $Z_{IN}$                  │
  └──────────────────────────────────────────────┘
                    │
                    ▼
        ┌─────────────────────────┐
        │   DESIGNING COMPLETED   │
        └─────────────────────────┘
```

## INTERNATIONAL SEARCH REPORT

| International application No. |
|---|
| PCT/JP2013/077565 |

**A. CLASSIFICATION OF SUBJECT MATTER**
*H02J17/00*(2006.01)i, *H01F38/14*(2006.01)i, *H02J7/00*(2006.01)i

According to International Patent Classification (IPC) or to both national classification and IPC

**B. FIELDS SEARCHED**

Minimum documentation searched (classification system followed by classification symbols)
H02J17/00, H01F38/14, H02J7/00

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho   1971–2013   Toroku Jitsuyo Shinan Koho   1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2011/065732 A2 (SAMSUNG ELECTRONICS CO., LTD.), 03 June 2011 (03.06.2011), paragraphs [74], [78] to [86] & JP 2013-512656 A      & US 2011/0127848 A1 & EP 2507893 A           & KR 10-2011-0060795 A & CN 102640394 A | 1–11 |
| Y | JP 6-54454 A (Matsushita Electric Works, Ltd.), 25 February 1994 (25.02.1994), paragraphs [0016], [0018] (Family: none) | 1–11 |

☒  Further documents are listed in the continuation of Box C.       ☐  See patent family annex.

\* Special categories of cited documents:
"A"  document defining the general state of the art which is not considered  to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| 15 November, 2013 (15.11.13) | 26 November, 2013 (26.11.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2013/077565 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-101578 A  (Matsushita Electric Works, Ltd.), 05 April 2002 (05.04.2002), paragraph [0059] (Family: none) | 1-11 |
| Y | WO 2011/148803 A1  (Murata Mfg. Co., Ltd.), 01 December 2011 (01.12.2011), paragraph [0038] & US 2012/0299392 A1    & EP 2579426 A1 & CN 102754306 A | 1-11 |
| Y | JP 4-206495 A  (Matsushita Electric Industrial Co., Ltd.), 28 July 1992 (28.07.1992), page 3, upper left column, line 5 to upper right column, line 7 (Family: none) | 1-11 |
| Y | JP 2012-182980 A  (TDK Corp.), 20 September 2012 (20.09.2012), paragraphs [0022] to [0025] & US 2012/0223587 A1 | 6,7,9,10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4624768 B

- JP 2010239769 A